# EUROPEAN PATENT SPECIFICATION

(11) **EP 1 342 388 B1**
(45) Date of publication and mention of the grant of the patent: **19.04.2006**
(21) Application number: 01272498.5
(22) Date of filing: 17.12.2001
(51) Int. Cl.: H04Q 7/38, H04Q 7/22, H04L 29/06

(54) **POSITIONING OF TERMINAL EQUIPMENT**
POSITIONIERUNG VON ENDGERÄTEN
POSITIONNEMENT D'UN EQUIPEMENT TERMINAL

(30) Priority: 15.12.2000 FI 20002757
(43) Date of publication of application: 10.09.2003
(73) Proprietor: TeliaSonera Finland Oyj, 00510 Helsinki (FI)
(72) Inventor: KARHU, Pekka, FIN-00330 Helsinki (FI); KEISALA, Ilkka, FIN-01600 Vantaa (FI); LAMMINLUOTO, Markku, FIN-00780 Helsinki (FI)
(74) Representative: Simmelvuo, Markku Kalevi
(86) International application number: PCT/FI2001/001105
(87) International publication number: WO 2002/054811

(56) References cited:
- WO-A1-00/44148
- WO-A1-00/76171
- WO-A1-00/79761
- US-A- 5 901 352

## Description

### FIELD OF THE INVENTION

The present invention relates to telecommunication technique. The present invention relates to a method, location server and system for obtaining the location information of a terminal device of a packet-switched telecommunication network.

### BACKGROUND OF THE INVENTION

Location-dependant notifications and services may be offered to a wireless terminal device, if only the location of the terminal device is known with a sufficient accuracy. In a mobile communication network, it is possible to try to determine the location of the terminal device e.g. by measuring the signals of the base stations.

At present, one specific problem is that the terminal device of a GPRS network (GPRS, Global Packet Radio Service) cannot be located with the accuracy of a cell. The basic factor for this problem is that on the IP interface of the GPRS network, no specific subscriber identifier is used. In the GPRS system, visible is only the IP address (IP, Internet Protocol) of the entity that requested the service. The IP address is, in addition, often dynamic by nature, i.e. it is created for each connection specifically.

One solution to the problem is to integrate a GPS positioning system (GPS, Global Positioning System) into the terminal device of a mobile communication network. This kind of solution is, however, costly. In addition, terminal devices become complicated.

WO 00/76171 discloses a method of providing information on the location of a first entity being connectable to a communication network via a second entity. An association is defined between the first entity and the second entity. The position of the second entity is defined and information on the position of the second entity is provided as information on the position of the first entity. In the reference publication position of the second entity is resolved using normal positioning procedures. The second entity is e.g. a mobile station that may calculate its position itself or another network element may determine its position.

WO 00/44148 discloses a method for finding a mobile wireless communication device when an Internet Protocol (IP) packet from a remote user is sent to the device over an IP network. The wireless device is for example a portable personal computer furnished with mobile data communication capabilities. In the method, the data communication network does not have any information about the connection between the IP address and the mobility of the wireless communications device, to send the packet to the recipient. Instead of discarding a packet the network is sending a request to the authentication server. This request is made on the basis of the IP address of the wireless communications device. The authentication server is maintaining a table mapping the IP address for the device to an identification number uniquely associated with the wireless device. This unique identification number (IMSI) may be for example the international mobile subscriber identity number of the wireless device. By utilising this unique identity number the message can be sent to its recipient.

### OBJECTIVE OF THE INVENTION

The objective of the invention is to eliminate the drawbacks referred to above or at least significantly to alleviate them. One specific objective of the invention is to disclose a new type of method and system, which enable one to locate a terminal device of a packet-switched telecommunication network such as a GPRS network with the accuracy of a cell.

### BRIEF DESCRIPTION OF THE INVENTION

The present invention relates to the obtaining of the location information of a GPRS terminal device. In the invention, a subscriber identifier/IP address pairs are got from the GPRS network and they are saved to the database. These pairs are being utilized when locating a GPRS terminal device.

The invention relates to a method for obtaining location information of a terminal device of a GPRS network. In the method, a PDP context (PDP, Packet Data Protocol) associated with the data-transmission connection is opened, and a location-dependant service request is sent to the service provider by means of the terminal device. The PDP context may be created by the terminal device or the telecommunication network.

According to the invention, the IP address allocated to the PDP context and the subscriber identifier of the user of the terminal device are determined, and they are saved to a database. The service provider sends an inquiry, which contains the IP address allocated to the PDP context. Based on this, it is possible to retrieve from the database the subscriber identifier of the user of the terminal device that is preferably a MSISDN number. Based on the subscriber identifier, a location server finds out the IMSI identifier from a home location register, and further the address of an SGSN node (SGSN, Serving GPRS Support Node) serving the terminal device.

The location server sends a BSSAP+ MS Information Request message (BSSAP, Base Station System Application Part) to the SGSN node. The SGSN node sends location information of the terminal device to the location server in a BSSAP+ MS Information Response message. The location server transmits the location information further to the service provider. The location information is advantageously used to mean CellID information. When the PDP context is released, the subscriber identifier associated with the PDP context and the IP address are deleted from the database.

The IP address allocated to the PDP context and the subscriber identifier of the user of the terminal device may be found out in many different ways. A GGSN node may send e.g. by means of the Radius protocol a radius message to the Radius server program, the radius message containing the IP address allocated to the PDP context and the subscriber identifier of the user of the terminal device. The location server may be used to monitor the GTP tunnel (GTP, Gateway Tunnel Protocol) between the SGSN node and the GGSN node and to pick up subscriber identifier/IP address pairs from there in the creation phase of the PDP context. The SGSN node may send subscriber identifier/IP address pairs to the location server.

The invention also relates to a method for obtaining location information of a terminal device of a GPRS network. In the method, a PDP context associated with the opening of a data-transmission connection is created, and a location-dependant service request is sent to a service provider by means of the terminal device. The PDP context may be created by the terminal device or the telecommunication network.

According to the invention, the IP address allocated to the PDP context and the subscriber identifier of the user of the terminal device are determined, and they are saved to a database. The service provider sends an inquiry, which contains the IP address allocated to the PDP context. Based on this, from the database, the subscriber identifier of the user of the GPRS terminal device corresponding to the IP address is retrieved that is advantageously a MSISDN number. A location server sends an ATI message (ATI, Any Time Interrogation) consistent with the MAP protocol to a home location register, the ATI message containing the subscriber identifier of the user of the terminal device. Instead of an ATI message, a SRI message (SRI, Send Routing Info) consistent with the MAP protocol may be used. The home location register converts the ATI inquiry into a PSI inquiry (PSI, Provide Subscriber Info) consistent with the MAP protocol and sends the PSI inquiry to a visitor location register. The visitor location register directs the PSI inquiry to an SGSN node using the MS Information Request message of the BSSAP+ protocol. The SGSN node returns the location information of the terminal device to the visitor location register in a MS Information Response message. The visitor location register sends a PSI response message to the home location register that contains location information. The home location register in turn sends an ATI response message to the location server that contains the location information. The location server transmits the location information further to the service provider. The location information is advantageously used to mean CellID information. When the PDP context is released, the subscriber identifier associated with the PDP context and the IP address are deleted from the database.

The IP address allocated to the PDP context and the subscriber identifier of the user of the terminal device may be found out in many different ways. A GGSN node may send e.g. by means of the Radius protocol a radius message to the Radius server program, the radius message containing the IP address allocated to the PDP context and the subscriber identifier of the user of the terminal device. The location server may be used to monitor the GTP tunnel between the SGSN node and the GGSN node and to pick up subscriber identifier/IP address pairs from there in the creation phase of the PDP context. The SGSN node may send subscriber identifier/IP address pairs to the location server.

The invention also relates to a method for obtaining location information of a terminal device of a GPRS network. In the method, a PDP context associated with the opening of a data-transmission connection is created, and a location-dependant service request is sent to a service provider by means of the terminal device. The PDP context may be created by the terminal device or the telecommunication network.

According to the invention, the IP address allocated to the PDP context and the subscriber identifier of the user of the GPRS terminal device are determined, and they are saved to a database. The service provider sends an inquiry, which contains the IP address allocated to the PDP context. Based on this, from the database, the subscriber identifier of the user of the terminal device is retrieved that is advantageously a MSISDN number. A location server is used to find out the IMSI identifier and the address of a serving mobile switching center from a home location register based on the subscriber identifier. The location server sends a short message to the terminal device using a circuit-switched connection.

After this, the location server sends an ATI message consistent with the MAP protocol to the home location register, the ATI message containing the subscriber identifier of the user of the terminal device. Instead of an ATI message, a SRI message consistent with the MAP protocol may be used. The home location register converts the ATI inquiry into a PSI inquiry consistent with the MAP protocol and sends it to a visitor location register. The visitor location register sends to the home location register a PSI response message that contains location information. The home location register in turn sends to the location server an ATI response message that contains the location information. The location server sends a MAP Abort message to the mobile switching center, if a MMS bit (MMS, More Messages to Send) was activated in the short message sent to the terminal device from the location server utilizing the circuit-switched connection. The location server transmits the location information further to the service provider. The location information is advantageously used to mean CellID information. When the PDP context is released, the subscriber identifier associated with the PDP context and the IP address are deleted from the database.

The IP address allocated to the PDP context and the subscriber identifier of the user of the terminal device may be found out in many different ways. A GGSN node may send e.g. by means of the Radius protocol a radius message to the Radius server program, the radius message containing the IP address allocated to the PDP context and the subscriber identifier of the user of the terminal device. The location server may be used to monitor the GTP tunnel between an SGSN node and the GGSN node and to pick up subscriber identifier/IP address pairs from there in the creation phase of the PDP context. The SGSN node may send subscriber identifier/IP address pairs to the location server.

The invention further relates to a location server for obtaining location information of a terminal device of a telecommunication network. The location server comprises further message means configured to receive an inquiry from a service provider the request containing the IP address allocated to the PDP context, to determine the subscriber identifier associated with the IP address from a database based on the inquiry, and to transmit received location information to the service provider, and a signaling interface configured to find out the IMSI identifier from a home location register based on the subscriber identifier, to find out an SGSN node serving the terminal device from the home location register, to send a BSSAP+ MS Information Request message to the SGSN node, to receive location information of the terminal device from the SGSN node in a BSSAP+ MS Information Response message.

In one embodiment of the invention, the location server comprises the database for saving the subscriber identifier/IP address pairs.

In one embodiment of the invention, the location server comprises data acquisition means for finding out the subscriber identifier/IP address pair associated with the user of the terminal device.

In one embodiment of the invention, the location server comprises message means for retrieving the subscriber identifier/IP address pairs from the database.

In one embodiment of the invention the data acquisition means are used to refer to the Radius server program.

In one embodiment of the invention, the data acquisition means are used to refer to a data collector, which is used to monitor the GTP tunnel between the SGSN node and a GGSN node.

In one embodiment of the invention, the subscriber identifier comprises an MSISDN number.

In one embodiment of the invention, the location information comprises a CellID identifier.

The invention also relates to a location server for obtaining location information of a terminal device of a telecommunication network. The location server comprises message means configured to receive an inquiry from a service provider that contains the IP address allocated to the PDP context, to find out the subscriber identifier associated with the IP address from a database based on the inquiry, and to transmit location information to the service provider, and a signaling interface configured to send to a home location register an ATI message consistent with the MAP protocol that contains the subscriber identifier of the user of the terminal device, and to receive from the home location register an ATI response message consistent with the MAP protocol that contains location information.

In one embodiment of the invention, the location server comprises the database for saving the subscriber identifier/IP address pairs.

In one embodiment of the invention, the location server comprises message means for retrieving the subscriber identifier/IP address pair from the database.

In one embodiment of the invention, the signaling interface is configured to substitute the ATI message with a SRI message consistent with the MAP protocol.

In one embodiment of the invention, the subscriber identifier comprises an MSISDN number.

In one embodiment of the invention, the location information comprises a CellID identifier.

In one embodiment of the invention, the location server comprises data acquisition means for finding out the subscriber identifier/IP address pair associated with the user of the terminal device. In one embodiment of the invention, the data acquisition means are used to refer to the Radius server program. In one embodiment of the invention, the data acquisition means are used to refer to a data collector which is used to monitor the GTP tunnel in between the SGSN node and a GGSN node.

The invention also relates to a location server for obtaining location information of a terminal device of a telecommunication network. The location server comprises message means configured to receive a location information request which contains a mobile subscriber identifier, and to transmit location information to a service provider, and a signaling interface configured to find out the IMSI identifier and the address of a serving mobile switching center from a home location register based on the subscriber identifier, to send a short message to the terminal device via a circuit-switched connection, to send an ATI message consistent with the MAP protocol to the home location register, the ATI message containing the subscriber identifier of the user of the terminal device, and to receive an ATI response message consistent with the MAP protocol from the home location register, the ATI response message containing location information.

In one embodiment of the invention, the location server comprises the database for saving the subscriber identifier/IP address pairs.

In one embodiment of the invention, the signaling interface is configured to substitute the ATI message with a SRI message consistent with the MAP protocol.

In one embodiment of the invention, if the MMS bit is activated in the short message, the signaling interface is configured to send a MAP Abort message to the mobile switching center prior to transmitting the location information to the service provider.

In one embodiment of the invention, the subscriber identifier comprises an MSISDN number.

In one embodiment of the invention, the location information comprises a CellID identifier.

In one embodiment of the invention, the location server comprises data acquisition means for finding out the subscriber identifier/IP address pair associated with the user of the terminal device. In one embodiment of the invention, the data acquisition means are used to refer to the Radius server program. In one embodiment of the invention, the data acquisition means are used to refer to a data collector which is used to monitor the GTP tunnel in between the SGSN node and a GGSN node.

The invention also relates to a system for obtaining location information of a terminal device of a GPRS network. The system comprises an SGSN node, a GGSN node, which is connected to the SGSN node, a GTP tunnel, which is located in between the SGSN node and the GGSN node, a service provider, which communicates with the GGSN node, a terminal device, which communicates with the SGSN node, and a home location register. The system further comprises a visitor location register, which communicates with the home location register and with the SGSN node and a mobile switching center, which communicates with the visitor location register. Furthermore, system comprises data acquisition means for finding out the subscriber identifier/IP address pair associated with the user of the terminal device and a database for saving the subscriber identifier/IP address pairs obtained using the data acquisition means.

According to the invention, the system further comprises a location server which comprises message means configured to receive an inquiry from the service provider the request containing the IP address allocated to the PDP context, to determine the subscriber identifier associated with the IP address from the database based on the inquiry, and to transmit received location information to the service provider, and a signaling interface configured to find out the IMSI identifier from the home location register based on the subscriber identifier, to find out the SGSN node serving the terminal device from the home location register, to send a BSSAP+ MS Information Request message to the SGSN node, and to receive location information of the terminal device from the SGSN node in a BSSAP+ MS Information Response message. The location server is configured to pose using the signaling interface as a standard network element towards the aforementioned network elements.

In one embodiment of the invention, the location server comprises the database for saving the subscriber identifier/IP address pairs.

In one embodiment of the invention, the location server comprises message means for retrieving the subscriber identifier/IP address pairs from the database.

In one embodiment of the invention, the location server comprises data acquisition means for finding out the subscriber identifier/IP address pair associated with the user of the terminal device.

In one embodiment of the invention, the data acquisition means are used to refer to a Radius server program, which receives information from the Radius client program of a GGSN node.

In one embodiment of the invention, the data acquisition means are used to refer to a data collector, which is used to monitor the GTP tunnel in between the SGSN node and the GGSN node.

In one embodiment of the invention, the SGSN node comprises data transmission means for sending the subscriber identifier/IP address pair to the location server.

In one embodiment of the invention, the subscriber identifier comprises an MSISDN number.

In one embodiment of the invention, the location information comprises a CellID identifier.

The invention also relates to a system for obtaining location information of a terminal device of a GPRS network. The system comprises an SGSN node, a GGSN node, which is connected to the SGSN node, a GTP tunnel, which is located in between the SGSN node and the GGSN node, a service provider, which communicates with the GGSN node, a terminal device, which communicates with the SGSN node, a home location register, a visitor location register, which communicates with the home location register and with the SGSN node, a mobile switching center, which communicates with the visitor location register, data acquisition means for finding out the subscriber identifier/IP address pair associated with the user of the terminal device, and a database for saving the subscriber identifier/IP address pairs obtained using the data acquisition means.

The system further comprises a location server which comprises message means configured to receive an inquiry from the service provider that contains the IP address allocated to the PDP context, to find out the subscriber identifier associated with the IP address from the database based on the inquiry, and to transmit location information to the service provider, and a signaling interface configured to send to the home location register an ATI message consistent with the MAP protocol that contains the subscriber identifier of the user of the terminal device, and to receive from the home location register an ATI response message consistent with the MAP protocol that contains location information. The location server is configured to pose using the signaling interface as a standard network element towards the aforementioned network elements.

In one embodiment of the invention, the location server comprises the database for saving the subscriber identifier/IP address pairs.

In one embodiment of the invention, the location server comprises message means for retrieving the subscriber identifier/IP address pairs from the database.

In one embodiment of the invention, the location server comprises data acquisition means for finding out the subscriber identifier/IP address pair associated with the user of the terminal device.

In one embodiment of the invention, the data acquisition means are used to refer to a Radius server program.

In one embodiment of the invention, the data acquisition means are used to refer to a data collector, which is used to monitor the GTP tunnel in between the SGSN node and the GGSN node.

In one embodiment of the invention, the SGSN node comprises data transmission means for sending the subscriber identifier/IP address pair to the location server.

In one embodiment of the invention, the subscriber identifier comprises an MSISDN number.

In one embodiment of the invention, the location information comprises a CellID identifier.

The invention also relates to a system for obtaining location information of a terminal device of a GPRS network. The system comprises an SGSN node, a GGSN node, which is connected to the SGSN node, a GTP tunnel, which is located in between the SGSN node and the GGSN node, a service provider, which communicates with the GGSN node, a terminal device, which communicates with the SGSN node, a home location register, a visitor location register, which communicates with the home location register and with the SGSN node, a mobile switching center which communicates with the visitor location register, data acquisition means for finding out the subscriber identifier/IP address pair associated with the user of the terminal device, and a database for saving the subscriber identifier/IP address pairs obtained using the data acquisition means. The system further comprises a location server which comprises message means configured to receive a location information request which contains a mobile subscriber identifier, to transmit location information to the service provider, and a signaling interface configured to find out the IMSI identifier and the address of the serving mobile switching center from the home location register based on the subscriber identifier, to send a short message to the terminal device via a circuit-switched connection, to send an ATI message consistent with the MAP protocol to the home location register, the ATI message containing the subscriber identifier of the user of the terminal device, and to receive an ATI response message consistent with the MAP protocol from the home location register, the ATI response message containing location information. The location server is configured to pose using the signaling interface as a standard network element towards the aforementioned network elements.

In one embodiment of the invention the location server comprises the database for saving the subscriber identifier/IP address pairs.

In one embodiment of the invention the location server comprises message means for retrieving the subscriber identifier/IP address pairs from the database.

In one embodiment of the invention the location server comprises data acquisition means for finding out the subscriber identifier/IP address pair associated with the user of the terminal device. In one embodiment of the invention the data acquisition means are used to refer to a Radius server program. In one embodiment of the invention the data acquisition means are used to refer to a data collector, which is used to monitor the GTP tunnel in between the SGSN node and the GGSN node.

In one embodiment of the invention, the SGSN node comprises data transmission means for sending the subscriber identifier/IP address pair to the location server.

In one embodiment of the invention the subscriber identifier comprises an MSISDN number.

In one embodiment of the invention the location information comprises a CellID identifier.

Thanks to the present invention, a GPRS terminal device equipped with the short message facility of a circuit-switched mobile communication network, as well as a terminal device equipped merely with the GPRS facility may be located with the accuracy of a cell.

### BRIEF DESCRIPTION OF THE DRAWINGS

In the following section, the invention will be described in detail with the aid of the examples of its embodiments, in which
Fig. 1 represents one advantageous system in accordance with the invention,
Fig. 2 represents one advantageous system in accordance with the invention,
Fig. 3 represents one advantageous system in accordance with the invention,
Fig. 4 represents one advantageous system in accordance with the invention,
Fig. 5 represents one advantageous system in accordance with the invention,
Fig. 6 is one advantageous signaling flow chart illustrating the function of the method in accordance with the invention,
Fig. 7 is one advantageous signaling flow chart illustrating the function of the method in accordance with the invention, and
Fig. 8 is one advantageous signaling flow chart illustrating the function of the method in accordance with the invention.

### DETAILED DESCRIPTION OF THE INVENTION

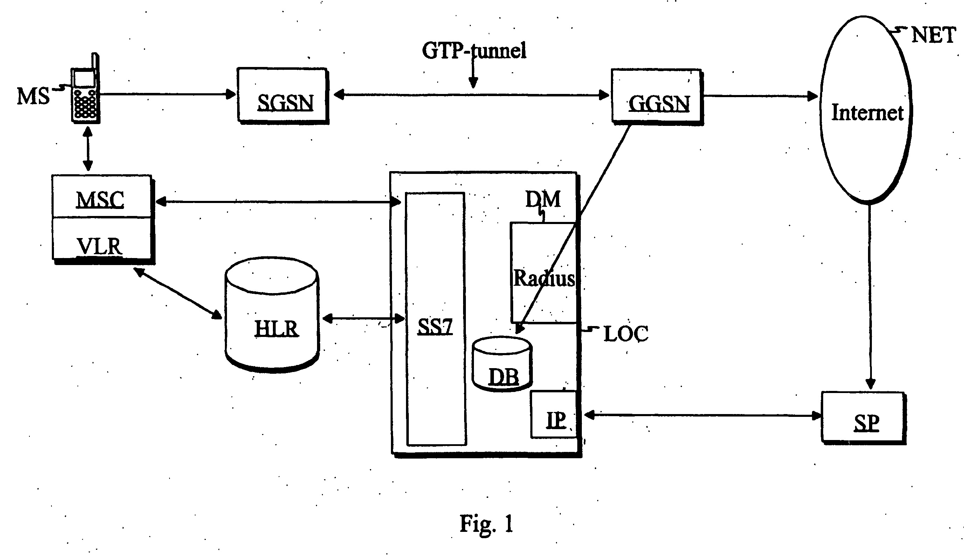

The system as shown in Fig. 1 comprises a GPRS terminal device MS, which communicates with the SGSN node SGSN. The SGSN node is connected to the GGSN node via the GTP tunnel. The SGSN, GGSN and GTP are the basic concepts of the GPRS system, further information on which is available e.g. in the standard ETSI EN 301 344 V6.6.0 (2000-02) of ETSI (ETSI, European Telecommunication Standardization Organization). From the GGSN node there is a connection to the service provider SP via the Internet NET. The system as shown in Fig. 1 comprises, in addition, a mobile switching center MSC (MSC, Mobile Switching Center) and a visitor location register VLR (VLR, Visitor Location Register), from which there is a connection to the home location register HLR (HLR, Home Location Register). From the home location register HLR there is a connection to the location server LOC.

According to the invention, the system comprises also a location server LOC from which there is a connection to the service provider SP, home location register HLR and to the GGSN node. The location server LOC comprises data acquisition means DM for finding out the subscriber identifier/IP address pair associated with the user of the GPRS terminal device, a database DB for saving the subscriber identifier/IP address pair obtained using the data acquisition means DM, message means IP for sending and receiving messages to the service provider/from the service provider SP, and a signaling interface SS7 for sending and receiving messages to the home location register/from the home location register HLR and to the mobile switching center/from the mobile switching center MSC.

The data acquisition means DM are advantageously used to refer to a Radius server program. In the GGSN node there is implemented a Radius protocol. More information on the Radius protocol is available e.g. in the publications RFC 2058 and RFC 2059 (RFC, Request For Comments). When a PDP context is opened from the terminal device MS, the Radius client program of the GGSN node sends a Radius message to the Radius server program DM of the location server LOC. The PDP context may be created by the terminal device or the telecommunication network. The message contains the dynamic IP address allocated to the PDP context and the subscriber identifier associated with the user of the terminal device, advantageously a MSISDN number. From the Radius server program DM, the dynamic IP address and the MSISDN number are copied to the database DB. When the PDP context is released, the connection between the subscriber identifier and the IP address is deleted. The Radius client program in the GGSN node sends a released message, which contains the subscriber identifier and the dynamic IP address. As a consequence of this, the subscriber identifier/IP address pair is deleted from the database DB.

In one embodiment of Fig. 1, the Radius server program DB and/or the database DB are separate components of the location server LOC.

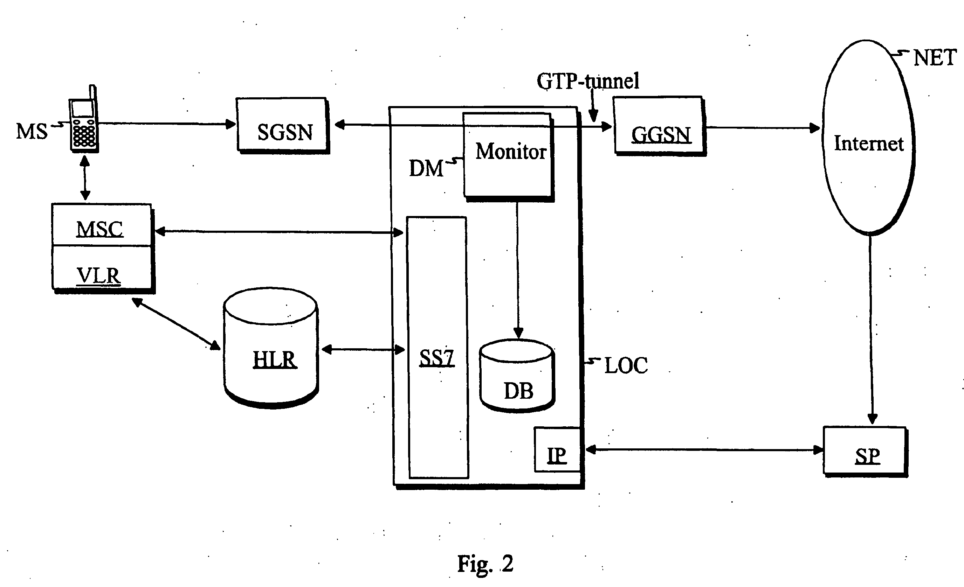

Fig. 2 represents one system in accordance with the invention that differs only little from the system as shown by Fig. 1. In the system as shown by Fig. 2, no Radius protocol is needed. Instead, in the GTP tunnel in between the SGSN node and the GGSN node, a monitoring unit DM is installed that monitors the traffic between the two aforementioned nodes. The monitoring unit DM retrieves the subscriber identifier/IP address pairs created in the creation phase of the PDP context. When this kind of pair is found, it is saved to the database DB. When the PDP context is released, the connection between the subscriber identifier and the IP address is deleted. This piece of information is monitored from the GTP tunnel, and as a consequence of this, the subscriber identifier/IP address pair is deleted from the database DB.

In one embodiment of Fig. 2, the monitoring unit DB and/or the database DB are separate components of the location server LOC.

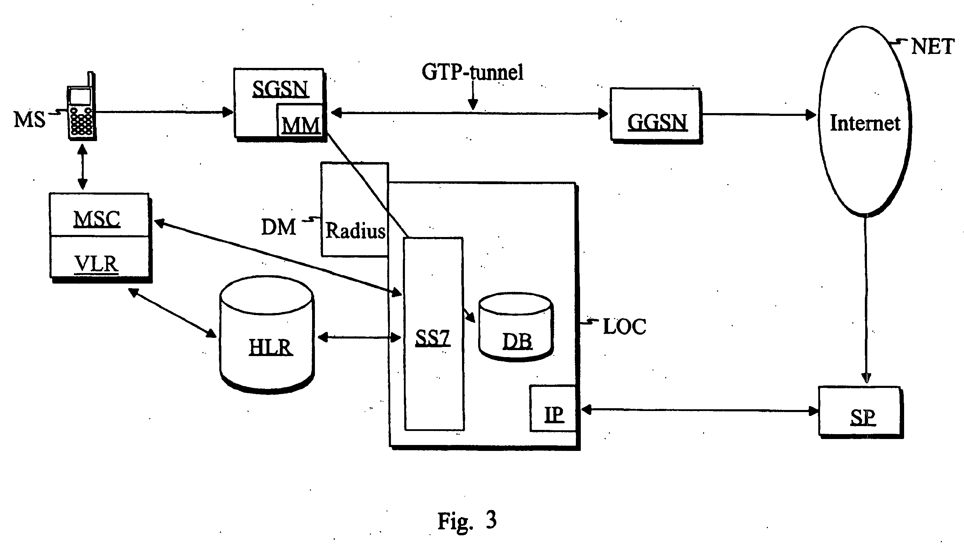

Fig. 3 represents one system in accordance with the invention that differs only little from the system as shown by Fig. 1. In the system as shown by Fig. 3, a monitoring unit resembling the one shown in Fig. 2 is constructed in the SGSN node. The SGSN node sends a notification of all the subscriber identifier/IP address pairs to the location server LOC. When the PDP context is released, the SGSN node sends a notification thereof to the location server LOC. The functioning described above may be implemented e.g. by means of the Radius protocol in such a way that the SGSN node comprises a Radius client program MM and the location server LOC a Radius server program DM.

In one embodiment of Fig. 3, the Radius server program DB and/or the database DB are separate components of the location server LOC.

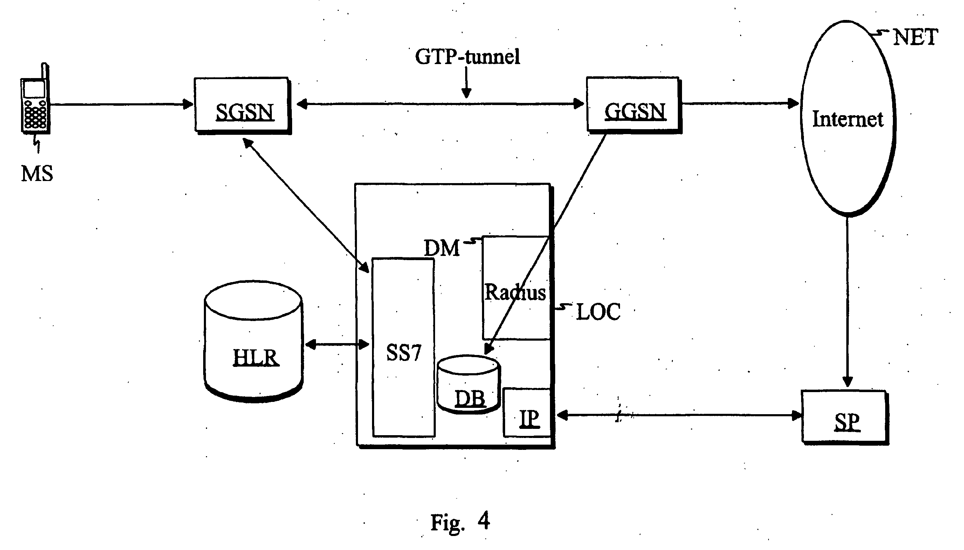

The system as shown in Fig. 4 comprises a GPRS terminal device MS which communicates with the SGSN node SGSN. The SGSN node is connected to the GGSN node by means of the GTP tunnel. There is a connection from the GGSN node to the service provider SP via the Internet NET. The system as shown in Fig. 4 comprises, in addition, a home location register HLR. In the system as shown in Fig. 4 it has been presented that the obtaining of the subscriber identifier/IP address pair information associated with the PDP context has been implemented by means of the Radius protocol and the GGSN node, just like in Fig. 1. The subscriber identifier/IP address pair information may alternatively be obtained in a manner as shown by Fig. 2 (monitoring unit) or as shown by Fig . 3 (SGSN). The location server LOC as shown in Fig- 4 differs from the location server shown in Fig. 1 in that the signaling interface SS7 may be used to send and receive messages to the home location register/from the home location register HLR and to the SGSN node/from the SGSN node.

In one embodiment of Fig. 4, the Radius server program DB and/or the database DB are separate components of the location server LOC.

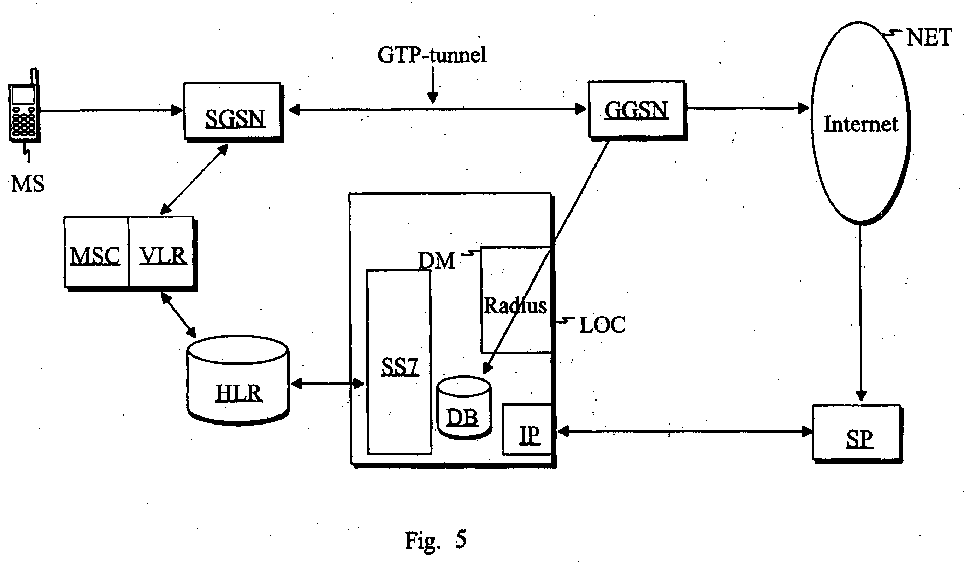

The system as shown in Fig. 5 comprises a GPRS terminal device MS which communicates with the SGSN node SGSN. The SGSN node is connected to the GGSN node by means of the GTP tunnel. There is a connection from the GGSN node to the service provider SP via the Internet NET. The system as shown in Fig. 5 comprises, in addition, a mobile switching center MSC and a visitor location register VLR, from which there is a connection to the home location register HLR and to SGSN node. There is a connection from the home location register HLR to the location server LOC. In the system as shown in Fig. 5 it has been presented that the obtaining of the subscriber identifier/IP address pair information associated with the PDP context has been implemented by means of the Radius protocol and the GGSN node, just like in Fig. 1. The subscriber identifier/IP address pair information may alternatively be obtained in a manner as shown by Fig. 2 (monitoring unit) or as shown by Fig. 3 (SGSN). The signaling interface SS7 may be used to send and receive messages to the home location register/from the home location register HLR.

In one embodiment of Fig. 5, the Radius server program DB and/or the database DB are separate components of the location server LOC.

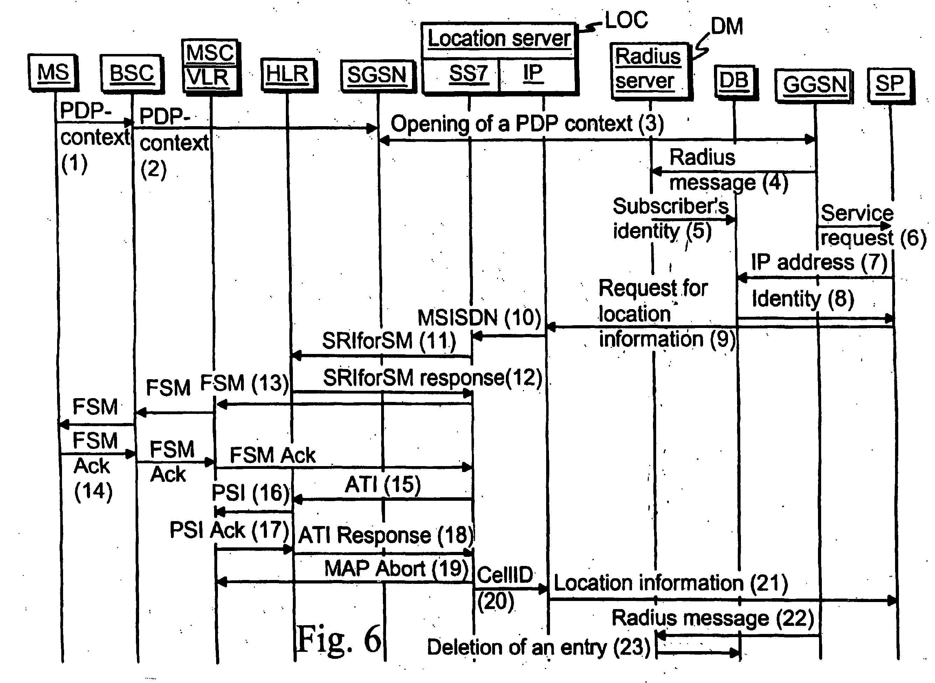

Fig. 6 is a signaling flow chart illustrating the function of the method of the invention in the system as shown in Fig. 1. Differing from the system as shown by Fig. 1, the Radius server DM and the database DB have in the example of Fig. 6 been separated as separate components apart from the location server LOC. They can, however, be also a part of the location server LOC.

The GPRS terminal device MS opens a PDP context to the SGSN node and from it further to the GGSN node, arrows 1- 3. The Radius client program of the GGSN node sends a Radius message (Accounting Start) to the Radius server program DM, arrow 4. The message contains at least a subscriber identifier (MSISDN) and a dynamic IP address. From the Radius server program DM, the subscriber identifier and the dynamic IP address are copied to the database DB, arrow 5. When the service provider receives a location-dependant service request, arrow 6, it makes, based on the dynamic IP address of the sender that is contained in the service request, a subscriber identifier inquiry to the data-base DB, arrow 7. The location-dependant service request is used to mean e.g. a request received from the GPRS terminal device MS in which one wishes to know the restaurants in the neighborhood. The database DB returns to the service provider SP the subscriber identifier associated with the IP address that is advantageously a MSISDN number, arrow 8. The service provider SP sends to the message means IP of the location server LOC a location information request, which contains the subscriber identifier (MSISDN), arrow 9. The message means IP transmit the subscriber identifier further to the signaling interface SS7, arrow 10.

The signaling interface SS7 sends to the home location register HLR a Send Routing Info for Short Message inquiry which contains the subscriber identifier MSISDN, arrow 11. As shown by arrow 12, the home location register HLR responds with a Send Routing Info for Short Message Response message. This message contains the IMSI identifier corresponding to the MSISDN number. In addition, it contains the address of the mobile switching center MSC serving the circuit-switched mobile station part of the GPRS terminal device MS, e.g. the GSM part (GSM, Global System for Mobile communications). The signaling interface SS7 sends a short message to the GPRS terminal device MS by means of a circuit-switched connection via the mobile switching center MSC and the base station controller BSC using a Forward Short Message, arrow 13. The FSM message contains a MMS parameter (More Messages To Send). If the MMS parameter has been activated in the message, the GPRS terminal device MS keeps waiting for new short messages for a while, and because of this, the visitor location register VLR stores the cell information as long as the radio connection is open. If the MMS parameter is not activated, the visitor location register VLR contains the cell information (CellID) only for a while, and after this, there is only the LAI information remaining (LAI, Location Area Identity). The GPRS terminal device MS sends a FMS Ack message to the signaling interface SS7, arrow 14. The FSM message has been described in more detail e.g. in the standard of ETSI ETSI TS 100 974 V7.5.1 (2000-09).

The signaling interface SS7 sends an ATI inquiry consistent with the MAP protocol to the home location register HLR, arrow 15. An operation alternative to the ATI inquiry is a Send Routing Info (SRI). The home location register HLR converts this inquiry into a PSI operation and sends a new inquiry to the visitor location register VLR, arrow 16. The visitor location register VLR returns the location information (CellID) to the home location register HLR in a PSI Ack message, arrow 17. As shown by arrow 18, the home location register HLR sends to the signaling interface SS7 an ATI Response message which contains the piece of location information. The signaling interface SS7 sends; in addition, a MAP Abort message to the mobile switching center MSC, arrow 19. The meaning of this message is that the circuit-switched radio connection earlier established to the terminal device GPRS is released. The MAP Abort message is sent, however, only when the MMS bit was activated in the FSM message as shown by arrow 13. In other words, if the visitor location register VLR supports the storing of the latest cell information, then an ordinary short message is sent that does not contain the activated MMS bit. If the visitor location register VLR does not support this feature, then a short message is sent that contains the activated MMS bit. In that case, one has to use a MAP Abort message, as shown above.

The peace of location information is transmitted to the service provider as shown by arrows 20 and 21. When the PDP context previously established is released, the Radius client program of the GGSN node transmits a released message (Accounting Stop) to the Radius server program -DM, arrow 22. The released message contains the subscriber identifier and the dynamic IP address. As a consequence of this, the subscriber identifier/IP address pair is deleted from the database DB, arrow 23.

In the signal flow chart as shown by Fig. 6 it has been presented that the obtaining of the piece of information on the subscriber identifier/IP address pair associated with the PDP context has been implemented by means of the Radius protocol and the GGSN node. Alternatively, the subscriber identifier/IP address pair may be obtained e.g. in a manner as shown by Fig. 2 (monitoring unit) or as shown by Fig. 3 (SGSN).

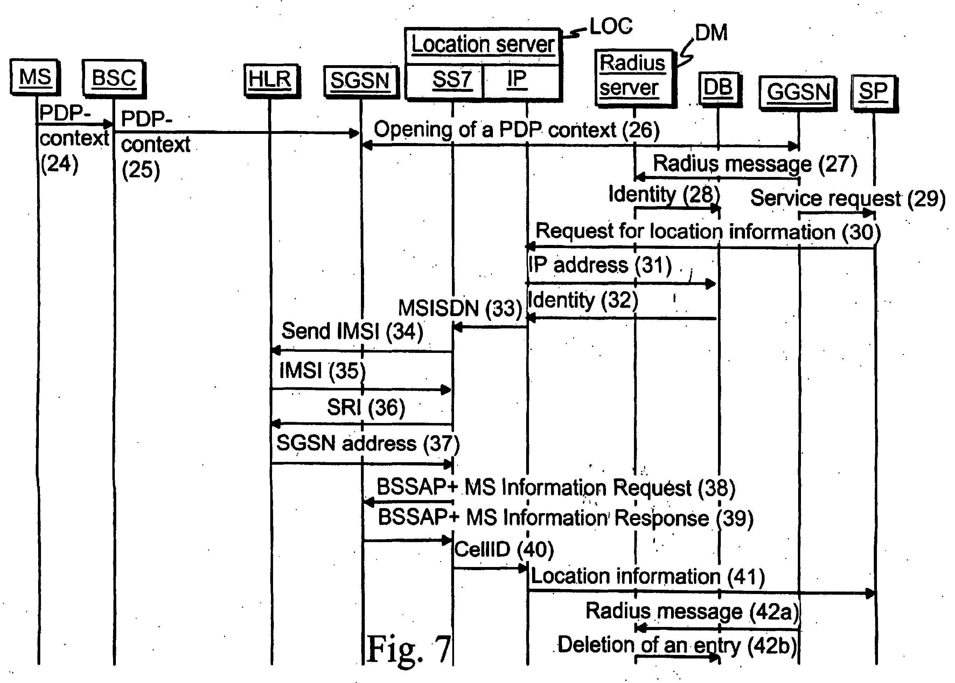

Fig. 7 is a signaling flow chart illustrating the function of the method of the invention in the system as shown in Fig. 4. Differing from the system as shown by Fig. 4, the Radius server DM and the database DB have in the example of Fig. 7 been separated as separate components apart from the location server LOC. They can, however, be also a part of the location server LOC.

The GPRS terminal device MS opens a PDP context to the SGSN node and from it further to the GGSN node, arrows 24 - 26. The Radius client program of the GGSN node sends a Radius message (Accounting Start) to the Radius server program DM, arrow 27. The message contains at least a subscriber identifier (MSISDN) and a dynamic IP address. From the Radius server program DM, the subscriber identifier and the dynamic IP address are copied to the database DB, arrow 28. When the service provider SP receives a location-dependant service request, it makes, based on the dynamic IP address of the sender that is contained in the service request, a location information inquiry to the location server LOC, arrows 29 and 30. The location-dependant service request is used to mean e.g. a request received from the GPRS terminal device MS in which one wishes to know the restaurants in the neighbourhood. The message means IP of the location server LOC are used check from the database DB with what subscriber identifier the received dynamic IP address is associated, arrows 31 and 32. The subscriber identifier is transmitted further to the signaling interface SS7.

The signaling interface SS7 sends to the home location register HLR a Send IMSI inquiry, which contains the subscriber identifier MSISDN, arrow 34. As shown by arrow 35, the home location register HLR sends an IMSI identifier to the signaling interface SS7. Next, the signaling interface SS7 sends to the home location register HLR a Send routing Info for GPRS service inquiry which contains the IMSI identifier previously retrieved, arrow 36. As shown by arrow 37, the signaling interface SS7 receives as a response the address of the SGSN node in whose area the GPRS terminal device MS is located. After this, the signaling interface SS7 sends, as shown by arrow 38, a MS information request message consistent with the BSSAP+ protocol to the SGSN node. The SGSN node returns the MS CellID information of the GPRS terminal device to the signaling interface SS7 in the MS Information Response message of the BSSAP+ protocol, arrow 39. The BBSSAP+ protocol has been described in more detail e.g. in the standard of ETSI STSI TS 101 346 V6.5.0 (1999-11).

The piece of location information is transmitted to the service provider SP, as shown by arrows 40 and 41. When the PDP context previously established is released, the Radius client program of the GGSN node transmits a released message (Accounting Stop) to the Radius server program DM, arrow 42a. The released message contains the subscriber identifier and the dynamic IP address. As a consequence of this, the subscriber identifier/IP address pair is deleted from the database DB, arrow 42b.

In the signal flow chart as shown by Fig. 7 it has been presented that the obtaining of the piece of information on the subscriber identifier/IP address pair associated with the PDP context has been implemented by means of the Radius protocol and the GGSN node. Alternatively, the subscriber identifier/IP address pair may be obtained e.g. in a manner as shown by Fig. 2 (monitoring unit) or as shown by Fig. 3 (SGSN) .

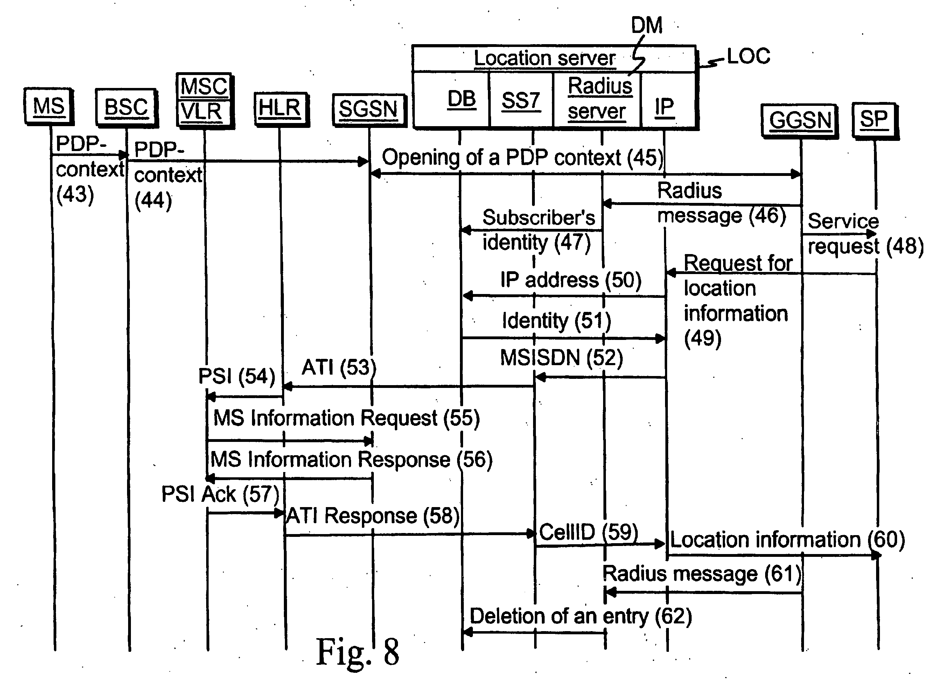

Fig. 8 is a signaling flow chart illustrating the function of the method of the invention in the system as shown, in Fig. 5. The database DB and the Radius server DM are in this example internal features of the location server LOC.

The GPRS terminal device MS opens a PDP context to the SGSN node and from it further to the GGSN node, arrows 43 - 45. The Radius client program of the GGSN node sends a Radius message (Accounting Start) to the Radius server program DM, arrow 46. The message contains at least a subscriber identifier (MSISDN) and a dynamic IP address. From the Radius server program DM, the subscriber identifier and the dynamic IP address are copied to the database DB, arrow 47. When the service provider SP receives a location-dependant service request, it makes, based on the dynamic IP address of the sender that is contained in the service request, a location information inquiry to message means IP of the location server LOC, arrows 48 and 49. The location-dependant service request is used to mean e.g. a request received from the GPRS terminal device MS in which one wishes to know the restaurants in the neighborhood. The message means IP of the location server LOC are used check from the database DB with what subscriber identifier the received dynamic IP address is associated, arrows 50 and 51. The subscriber identifier is transmitted further to the signaling interface SS7, arrow 52.

The signaling interface SS7 sends to the home location register HLR an ATI inquiry consistent with the MAP protocol, arrow 53. An alternative operation to the ATI, inquiry is a Send routing Info (SRI). The home location register HLR converts this inquiry into a PSI operation and sends a new inquiry to the visitor location register VLR, arrow 54. The visitor location register VLR forwards this inquiry to the SGSN node using the Gs interface of the GPRS system, the BSSAP+ Protocol and the MS Information Request message, arrow 55. As a consequence of the inquiry, the SGSN node returns the CellID information to the visitor location register VLR in a MS Information Response Message, arrow 56. The visitor location register VLR returns the CellID information to the home location register HLR in a PSI Ack message, arrow 57. As shown by arrow 58, the home location register HLR sends to the signaling interface SS7 an ATI Response message which contains the piece of location information.

The piece of location information is transmitted to the service provider SP, as shown by arrows 59 and 60. When the PDP context previously established is released, the Radius client program of the GGSN node transmits a released message (Accounting Stop) to the Radius server program DM of the location server LOC, arrow 61. The released message contains the subscriber identifier and the dynamic IP address. As a consequence of this, the subscriber identifier/IP address pair is deleted from the database DB, arrow 62.

In the signal flow chart as shown by Fig. 8 it has been presented that the obtaining of the piece of information on the subscriber identifier/IP address pair associated with the PDP context has been implemented by means of the Radius protocol and the GGSN node. Alternatively, the subscriber identifier/IP address pair may be obtained.. e.g. in a manner as shown by Fig. 2 (monitoring unit) or as shown by Fig. 3 (SGSN).

Thanks to the invention it is possible to locate a GPRS terminal device with the accuracy of a cell area. The systems/methods as shown in Figs. 1, 2, 3 and 6 require that the GPRS terminal device is equipped with the short message feature of a circuit-switched mobile communication network, e.g. a GSM network. Figs. 4, 5, 7 and 8 present a system/method which functions also in such a case when the GPRS terminal device is equipped solely with the GPRS feature. Although it has been presented in the examples of Figs. 1 and 3 - 8 that the data acquisition means DM refer to a Radius server program and that the subscriber identifier/IP address pair is received from the GGSN node or the SGSN node by means of the Radius client program, the data acquisition means DM may refer to any other means by means of which the subscriber identifier/IP address pair may be found out.

In Fig. 6 it has been presented that the service provider SP asks for the subscriber identifier (MSISDN) from the database DB by means of the IP address. In Fig. 7 it has been presented that the same inquiry is made by the location server LOC. In Figs. 6 and 7, the database DB and the Radius server DM are separate components of the location server LOC. In the example of Fig. 8, the database DB and the Radius server DM are internal features of the location server LOC. These are, however, implementations of the method and system of the invention by way of example only.

In the examples as shown by Figs. 1 - 3, 5, 6 and 8, the home location register HLR makes a VLR PSI inquiry to the visitor location register after the ATI inquiry. The location server LOC may make a PSI inquiry directly to the visitor location register VLR when necessary in such a way that it is not necessary to send an ATI inquiry at all. This requires, however, that the signaling interface SS7 of the location server LOC checks from the home location register the IMSI identifier corresponding to the MSISDN number and the address of the visitor location register VLR. This information the signaling interface SS7 gets from the home location register e.g. by means of a Send Routing Info message or by means of a Send Routing Info for Short Message. The Send Routing Info inquiry is used to find out the address of the mobile switching center MSC from which one can derive the address of the visitor location register VLR. The Send Routing Info for Short Message inquiry is used to find out the address of the visitor location register VLR. The visitor location register VLR returns the piece of location information (CELLID.) of the GPRS terminal device MS to the signaling interface SS7 in a PSI Response message.

The invention is not restricted merely to the examples of its embodiments referred to above, instead many variations are possible within the scope of the inventive idea defined by the claims.

## Claims

1. A method for obtaining location information of a terminal device (MS) of a GPRS network, which method comprises the steps of:
a) creating a PDP context associated with the opening of a data-transmission connection;
b) sending a location-dependant service request to a service provider (SP) using the terminal device (MS);
c) determining the IP address allocated to the PDP context and the subscriber identifier of the user of the terminal device (MS);
d) saving the IP address allocated to the PDP context and the subscriber identifier of the user of the terminal device (MS) to a database (DB);
**characterized in that** the method further comprises the steps of:
e) sending an inquiry from the service provider (SP) that contains the IP address allocated to the PDP context;
f) finding out the subscriber identifier associated with the IP address from the database based on the inquiry;
g) finding out the IMSI identifier from a home location register (HLR) based on the subscriber identifier using a location server (LOC);
h) finding out an SGSN node (SGSN) serving the terminal device (MS) from the home location register (HLR) using the location server (LOC);
i) sending a BSSAP+ MS Information Request message from the location server (LOC) to the SGSN node (SGSN);
j) sending location information of the terminal device (MS) from the SGSN node (SGSN) to the location server (LOC) in a BSSAP+ MS Information Response message; and
k) transmitting the received location information from the location server (LOC) to the service provider (SP) .

2. The method according to claim 1, **characterized in that** at step c) sending from a GGSN node (GGSN), by means of the Radius protocol, a radius message to a Radius server program that contains the IP address allocated to the PDP context and the subscriber identifier of the user of the GPRS terminal device (MS).

3. The method according to claim 1, **characterized in that** at step c) monitoring a GTP tunnel in between the SGSN node (SGSN) and a GGSN node (GGSN) by means of the location server (LOC) and picking up subscriber identifier/IP address pairs from there in the creation phase of the PDP context.

4. The method according to claim 1, **characterized in that** at step c) sending the subscriber identifier/IP address pair from the SGSN node (SGSN) to the location server (LOC).

5. The method according to claim 1, **characterized in that** the subscriber identifier associated with the PDP context and the IP address are deleted from the database (DB), when the PDP context is released.

6. The method according to claim 1, **characterized in that** the subscriber identifier comprises an MSISDN number.

7. The method according to claim 1, **characterized in that** the location information comprises a CellID identifier.

8. A method for obtaining location information of a terminal device (MS) of a GPRS network, which method comprises the steps of:
a) creating a PDP context associated with the opening of a data-transmission connection;
b) sending a location-dependant service request to a service provider by means of the terminal device (MS) ;
c) determining the IP address allocated to the PDP context and the subscriber identifier of the user of the terminal device (MS);
d) saving the IP address allocated to the PDP context and the subscriber identifier of the user of the terminal device (MS) to a database (DB);
**characterized in that** the method further comprises the steps of:
e) sending an inquiry from the service provider (SP) that contains the IP address allocated to the PDP context;
f) finding out the subscriber identifier associated with the IP address from the database (DB) based on the inquiry:
g) sending from a location server (LOC) to a home location register (HLR) an ATI message consistent with the MAP protocol that contains the subscriber identifier of the user of the terminal device (MS);
h) sending a PSI inquiry consistent with the MAP protocol from the home location register (HLR) to a visitor location register (VLR);
i) sending a BSSAP+ MS Information Request message from the visitor location register (VLR) to an SGSN node (SGSN);
j) sending a BSSAP+ MS Information Response message of the terminal device (MS) from the SGSN node (SGSN) to the visitor location register (VLR);
k) sending from the visitor location register (VLR) to the home location register (HLR) a PSI response message consistent with the MAP protocol that contains location information;
l) sending from the home location register (HLR) to the location server (LOC) an ATI response message consistent with the MAP protocol that contains the location information, and
m) transmitting the location information from the location server (LOC) to the service provider (SP).

9. The method according to claim 8, **characterized in that** at step c) sending from a GGSN node (GGSN), by means of the Radius protocol, a Radius message to the Radius server program that contains the IP address allocated to the PDP context and the subscriber identifier of the user of the terminal device (MS).

10. The method according to claim 8, **characterized in that** at step c) monitoring the GTP tunnel in between the SGSN node (SGSN) and the GGSN node (GGSN) by means of the location server (LOC) and picking up subscriber identifier/IP address pairs in the creation phase of the PDP context.

11. The method according to claim 8, **characterized in that** at step c) sending the subscriber identifier/IP address pair from the SGSN node (SGSN) to the location server (LOC).

12. The method according to claim 8, **characterized in that** the subscriber identifier associated with the PDP context and the IP address are deleted from the database (DB), when the PDP context is released.

13. The method according to claim 8, **characterized in that** at step g) and l) substituting the ATI message with a SRI message consistent with the MAP protocol.

14. The method according to claim 8, **characterized in that** the subscriber identifier comprises an MSISDN number.

15. The method according to claim 8, **characterized in that** the location information comprises a CellID identifier.

16. A method for obtaining location information of a terminal device (MS) of a GPRS network, which method comprises the steps of:
a) creating a PDP context associated with the opening of a data-transmission connection;
b) sending a location-dependant service request to a service provider (SP) by means of the terminal device (MS);
c) determining the IP address allocated to the PDP context and the subscriber identifier of the user of the terminal device (MS);
d) saving the IP address allocated to the PDP context and the subscriber identifier of the user of the terminal device (MS) to a database (DB);
**characterized in that** the method further comprises the steps of:
e) sending an inquiry from the service provider (SP) that contains the IP address allocated to the PDP context;
f) finding out the subscriber identifier associated with the IP address from the database (DB) based on the inquiry;
g) finding out the IMSI identifier and the address of a serving mobile switching center (MSC) from a home location register (HLR) based on the subscriber identifier by means of a location server (LOC);
h) sending a short message from the location server (LOC) to the terminal device (MS) via a circuit-switched connection;
i) sending an ATI message consistent with the MAP protocol from the location server (LOC) to the home location register (HLR), the ATI message containing the subscriber identifier of the user of the terminal device (MS);
j) sending a PSI inquiry consistent with the MAP protocol from the home location register (HLR) to a visitor location register (VLR);
k) sending a PSI response message consistent with the MAP protocol from the visitor location register (VLR) to the home location register (HLR), the PSI response message containing location information;
l) sending an ATI response message consistent with the MAP protocol from the home location register (HLR) to the location server (LOC), the ATI response message containing the location information; and
m) transmitting the location information from the location server (LOC) to the service provider (SP).

17. The method according to claim 16, **characterized in that** at step c) sending from a GGSN node (GGSN), by means of the Radius protocol, a radius message to a Radius server program that contains the IP address allocated to the PDP context and the subscriber identifier of the user of the terminal device (MS).

18. The method according to claim 16, **characterized in that** at step c) monitoring a GTP tunnel in between the SGSN node (SGSN) and a GGSN node (GGSN) by means of the location server (LOC) and picking up subscriber identifier/IP address pairs from there in the creation phase of the PDP context.

19. The method according to claim 16, **characterized in that** at step c) sending the subscriber identifier/IP address pair from the SGSN node (SGSN) to the location server (LOC).

20. The method according to claim 16, **characterized in that** at step i) and l) substituting the ATI message with a SRI message consistent with the MAP protocol.

21. The method according to claim 16, **characterized in that** if at step h) the MMS bit is activated in the short message, then prior to step m):
sending a MAP Abort message from the location server (LOC) to the mobile switching center (MSC).

22. The method according to claim 16, **characterized in that** the subscriber identifier associated with the PDP context and the IP address are deleted from the database (DB), when the PDP context is released.

23. The method according to claim 16, **characterized in that** the subscriber identifier comprises an MSISDN number.

24. The method according to claim 16, **characterized in that** the location information comprises a CellID identifier.

25. A location server for obtaining location information of a terminal device (MS) of a telecommunication network,
**characterized in that** the location server comprises:
message means (IP) configured to receive an inquiry from a service provider (SP) the request containing the IP address allocated to the PDP context, to determine the subscriber identifier associated with the IP address from a database (DB) based on the inquiry, and to transmit received location information to the service provider (SP); and
a signaling interface (SS7) configured to find out the IMSI identifier from a home location register (HLR) based on the subscriber identifier, to find out an SGSN node (SGSN) serving the terminal device (MS) from the home location register (HLR), to send a BSSAP+ MS Information Request message to the SGSN node (SGSN), to receive location information of the terminal device from the SGSN node (SGSN) in a BSSAP+ MS Information Response message.

26. The location server according to claim 25, **characterized in that** the location server comprises the database (DB) for saving the subscriber identifier/IP address pairs.

27. The location server according to claim 25, **characterized in that** the location server comprises data acquisition means (DM) for finding out the subscriber identifier/IP address pair associated with the user of the terminal device (MS).

28. The location server according to claim 25, **characterized in that** the location server comprises message means (IP) for retrieving the subscriber identifier/IP address pair from the database (DB).

29. The location server according to claim 27, **characterized in that** the data acquisition means (DM) are used to refer to a Radius server program.

30. The location server according to claim 27, **characterized in that** the data acquisition means (DM) are used to refer to a data collector which is used to monitor a GTP tunnel (GTP) in between the SGSN node (SGSN) and a GGSN node (GGSN).

31. The location server according to claim 25, **characterized in that** the subscriber identifier comprises an MSISDN number.

32. The location server according to claim 25, **characterized in that** the location information comprises a CellID identifier.

33. A location server for obtaining location information of a terminal device (MS) of a telecommunication network,
**characterized in that** the location server comprises:
message means (IP) configured to receive an inquiry from a service provider (SP) that contains the IP address allocated to the PDP context, to find out the subscriber identifier associated with the IP address from a database (DB) based on the inquiry, and to transmit location information to the service provider (SP); and
a signaling interface (SS7) configured to send to a home location register (HLR) an ATI message consistent with the MAP protocol that contains the subscriber identifier of the user of the terminal device (MS), and to receive from the home location register (HLR) an ATI response message consistent with the MAP protocol that contains location information.

34. The location server according to claim 33, **characterized in that** the location server comprises the database (DB) for saving the subscriber identifier/IP address pairs.

35. The location server according to claim 33, **characterized in that** the location server comprises message means (IP) for retrieving the subscriber identifier/IP address pair from the database (DB).

36. The location server according to claim 33, **characterized in that** that the signaling interface (SS7) is configured to substitute the ATI message with a SRI message consistent with the MAP protocol.

37. The location server according to claim 33, **characterized in that** the subscriber identifier comprises an MSISDN number.

38. The location server according to claim 33, **characterized in that** the location information comprises a CellID identifier.

39. The location server according to claim 33, **characterized in that** the location server comprises data acquisition means (DM) for finding out the subscriber identifier/IP address pair associated with the user of the terminal device (MS).

40. The location server according to claim 39, **characterized in that** the data acquisition means (DM) are used to refer to a Radius server program.

41. The location server according to claim 39, **characterized in that** the data acquisition means (DM) are used to refer to a data collector which is used to monitor a GTP tunnel (GTP) in between the SGSN node (SGSN) and a GGSN node (GGSN).

42. A location server for obtaining location information of a terminal device (MS) of a telecommunication network,
**characterized in that** the location server comprises:
message means (IP) configured to receive a location information request which contains a mobile subscriber identifier, and to transmit location information to a service provider (SP); and
a signaling interface (SS7) configured to find out the IMSI identifier and the address of a serving mobile switching center (MSC) from a home location register (HLR) based on the subscriber identifier, to send a short message to the terminal device (MS) via a circuit-switched connection, to send an ATI message consistent with the MAP protocol to the home location register (HLR), the ATI message containing the subscriber identifier of the user of the terminal device (MS), and to receive an ATI response message consistent with the MAP protocol from the home location register (HLR), the ATI response message containing location information.

43. The location server according to claim 42, **characterized in that** the location server comprises the database (DB) for saving the subscriber identifier/IP address pairs.

44. The location server according to claim 42, **characterized in that** the signaling interface (SS7) is configured to substitute the ATI message with a SRI message consistent with the MAP protocol.

45. The location server according to claim 42, **characterized in that** if the MMS bit is activated in the short message, the signaling interface (SS7) is configured to send a MAP Abort message to the mobile switching center prior to transmitting the location information to the service provider (SP).

46. The location server according to claim 42, **characterized in that** the subscriber identifier comprises an MSISDN number.

47. The location server according to claim 42, **characterized in that** the location information comprises a CellID identifier.

48. The location server according to claim 42, **characterized in that** the location server comprises data acquisition means (DM) for finding out the subscriber identifier/IP address pair associated with the user of the terminal device (MS).

49. The location server according to claim 48, **characterized in that** the data acquisition means (DM) are used to refer to a Radius server program.

50. The location server according to claim 48, **characterized in that** the data acquisition means (DM) are used to refer to a data collector which is used to monitor a GTP tunnel (GTP) in between the SGSN node (SGSN) and a GGSN node (GGSN).

51. A system for obtaining location information of a terminal device of a GPRS network, which system comprises:
an SGSN node (SGSN);
a GGSN node (GGSN), which is connected to the SGSN node (SGSN);
a GTP tunnel (GTP), which is located in between the SGSN node (SGSN) and the GGSN node (GGSN);
a service provider (SP), which communicates with the GGSN node (GGSN);
a terminal device (MS), which communicates with the SGSN node (SGSN);
a home location register (HLR);
a visitor location register (VLR), which communicates with the home location register (HLR) and with the SGSN node (SGSN);
a mobile switching center (MSC) which communicates with the visitor location register (VLR);
data acquisition means (DM) for finding out the subscriber identifier/IP address pair associated with the user of the terminal device (MS);
a database (DB) for saving the subscriber identifier/IP address pairs obtained using the data acquisition means (DM);
**characterized in that** the system further comprises:
a location server (LOC) which comprises:
message means (IP) configured to receive an inquiry from the service provider (SP) the request containing the IP address allocated to the PDP context, to determine the subscriber identifier associated with the IP address from the database (DB) based on the inquiry, and to transmit received location information to the service provider (SP); and
a signaling interface (SS7) configured to find out the IMSI identifier from the home location register (HLR) based on the subscriber identifier, to find out the SGSN node (SGSN) serving the terminal device (MS) from the home location register (HLR), to send a BSSAP+ MS Information Request message to the SGSN node (SGSN), and to receive location information of the terminal device (MS) from the SGSN node (SGSN) in a BSSAP+ MS Information Response message;
wherein the location server is configured to pose using the signaling interface (SS7) as a standard network element towards the aforementioned network elements.

52. The system according to claim 51, **characterized in that** the location server (LOC) comprises the database (DB) for saving the subscriber identifier/IP address pairs.

53. The system according to claim 51, **characterized in that** the location server (LOC) comprises message means (IP) for retrieving the subscriber identifier/IP address pairs from the database (DB).

54. The system according to claim 51, **characterized in that** the location server (LOC) comprises data acquisition means (DM) for finding out the subscriber identifier/IP address pair associated with the user of the terminal device.

55. The system according to claim 54, **characterized in that** the data acquisition means (DM) are used to refer to a Radius server program.

56. The system according to claim 54, **characterized in that** the data acquisition means (DM) are used to refer to a data collector which is used to monitor the GTP tunnel (GTP) in between the SGSN node (SGSN) and the GGSN node (GGSN).

57. The system according to claim 51, **characterized in that** the SGSN node (SGSN) comprises data transmission means (MM) for sending the subscriber identifier/IP address pair to the location server (LOC).

58. The system according to claim 51, **characterized in that** the subscriber identifier comprises an MSISDN number.

59. The system according to claim 51, **characterized in that** the location information comprises a CellID identifier.

60. A system for obtaining location information of a terminal device of a GPRS network, which system comprises:
an SGSN node (SGSN);
a GGSN node (GGSN), which is connected to the SGSN node (SGSN);
a GTP tunnel (GTP), which is located in between the SGSN node (SGSN) and the GGSN node (GGSN);
a service provider (SP), which communicates with the GGSN node (GGSN);
a terminal device (MS), which communicates with the SGSN node (SGSN);
a home location register (HLR);
a visitor location register (VLR), which communicates with the home location register (HLR) and with the SGSN node (SGSN) ;
a mobile switching center (MSC) which communicates with the visitor location register (VLR) ;
data acquisition means (DM) for finding out the subscriber identifier/IP address pair associated with the user of the terminal device (MS) ;
a database (DB) for saving the subscriber identifier/IP address pairs obtained using the data acquisition means (DM);
**characterized in that** the system further comprises:
a location server (LOC) which comprises:
message means (IP) configured to receive an inquiry from the service provider (SP) that contains the IP address allocated to the PDP context, to find out the subscriber identifier associated with the IP address from the database (DB) based on the inquiry, and to transmit location information to the service provider (SP); and
a signaling interface (SS7) configured to send to the home location register (HLR) an ATI message consistent with the MAP protocol that contains the subscriber identifier of the user of the terminal device (MS), and to receive from the home location register (HLR) an ATI response message consistent with the MAP protocol that contains location information;
wherein the location server is configured to pose using the signaling interface (SS7) as a standard network element towards the aforementioned network elements.

61. The system according to claim 60, **characterized in that** the location server (LOC) comprises the database (DB) for saving the subscriber identifier/IP address pairs.

62. The system according to claim 60, **characterized in that** the location server (LOC) comprises message means (IP) for retrieving the subscriber identifier/IP address pairs from the database (DB).

63. The system according to claim 60, **characterized in that** the location server (LOC) comprises data acquisition means (DM) for finding out the subscriber identifier/IP address pair associated with the user of the terminal device (MS).

64. The system according to claim 63, **characterized in that** the data acquisition means (DM) are used to refer to a Radius server program.

65. The system according to claim 63, **characterized in that** the data acquisition means (DM) are used to refer to a data collector which is used to monitor the GTP tunnel (GTP) in between the SGSN node (SGSN) and the GGSN node (GGSN).

66. The system according to claim 60, **characterized in that** the SGSN node (SGSN) comprises data transmission means (MM) for sending the subscriber identifier/IP address pair to the location server (LOC).

67. The system according to claim 60, **characterized in that** the subscriber identifier comprises an MSISDN number.

68. The system according to claim 60, **characterized in that** the location information comprises a CellID identifier.

69. A system for obtaining location information of a terminal device of a GPRS network, which system comprises:
an SGSN node (SGSN);
a GGSN node (GGSN), which is connected to the SGSN node (SGSN);
a GTP tunnel (GTP), which is located in between the SGSN node (SGSN) and the GGSN node (GGSN);
a service provider (SP), which communicates with the GGSN node (GGSN);
a terminal device (MS), which communicates with the SGSN node (SGSN);
a home location register (HLR);
a visitor location register (VLR), which communicates with the home location register (HLR) and with the SGSN node (SGSN);
a mobile switching center (MSC) which communicates with the visitor location register (VLR);
data acquisition means (DM) for finding out the subscriber identifier/IP address pair associated with the user of the terminal device (MS);
a database (DB) for saving the subscriber identifier/IP address pairs obtained using the data acquisition means (DM);
**characterized in that** the system further comprises:
a location server (LOC) which comprises:
message means (IP) configured to receive a location information request which contains a mobile subscriber identifier, to transmit location information to the service provider (SP); and
a signaling interface (SS7) configured to find out the IMSI identifier and the address of the serving mobile switching center (MSC) from the home location register (HLR) based on the subscriber identifier, to send a short message to the terminal device (MS) via a circuit-switched connection, to send an ATI message consistent with the MAP protocol to the home location register (HLR), the ATI message containing the subscriber identifier of the user of the terminal device (MS), and to receive an ATI response message consistent with the MAP protocol from the home location register (HLR), the ATI response message containing location information;
wherein the location server is configured to pose using the signaling interface (SS7) as a standard network element towards the aforementioned network elements.

70. The system according to claim 69, **characterized in that** the location server (LOC) comprises the database (DB) for saving the subscriber identifier/IP address pairs.

71. The system according to claim 69, **characterized in that** the location server (LOC) comprises message means (IP) for retrieving the subscriber identifier/IP address pairs from the database (DB).

72. The system according to claim 69, **characterized in that** the location server (LOC) comprises data acquisition means (DM) for finding out the subscriber identifier/IP address pair associated with the user of the terminal device (MS).

73. The system according to claim 72, **characterized in that** the data acquisition means (DM) are used to refer to a Radius server program.

74. The system according to claim 72, **characterized in that** the data acquisition means (DM) are used to refer to a data collector which is used to monitor the GTP tunnel (GTP) in between the SGSN node (SGSN) and the GGSN node (GGSN).

75. The system according to claim 69, **characterized in that** the SGSN node (SGSN) comprises data transmission means (MM) for sending the subscriber identifier/IP address pair to the location server (LOC).

76. The system according to claim 69, **characterized in that** the subscriber identifier comprises an MSISDN number.

77. The system according to claim 69, **characterized in that** the location information comprises a CellID identifier.

## Revendications

1. Procédé d'obtention d'informations de localisation d'un dispositif terminal (MS) d'un réseau GPRS, ledit procédé comprenant les étapes consistant à :
a) créer un contexte PDP associé à l'ouverture d'une connexion de transmission de données ;
b) envoyer une requête de service relatif à la localisation à un prestataire de services (SP), en utilisant le dispositif terminal (MS) ;
c) déterminer l'adresse IP attribuée au contexte PDP, et l'identifiant d'abonné de l'utilisateur du dispositif terminal (MS) ;
d) enregistrer l'adresse IP attribuée au contexte PDP, et l'identifiant d'abonné de l'utilisateur du dispositif terminal (MS) dans une base de données (DB) ;
**caractérisé en ce que** le procédé comprend en outre les étapes consistant à:
e) envoyer une demande de la part du prestataire de services (SP), qui contient l'adresse IP attribuée au contexte PDP ;
f) rechercher l'identifiant d'abonné associé à l'adresse IP dans la base de données, sur la base de la demande ;
g) rechercher l'identifiant IMSI dans un registre de localisation nominal (HLR), sur la base de l'identifiant d'abonné, en utilisant un serveur de localisation (LOC) ;
h) rechercher un noeud SGSN (SGSN) desservant le dispositif terminal (MS) dans le registre de localisation nominal (HLR), en utilisant le serveur de localisation (LOC) ;
i) envoyer un message de requête d'informations BSSAP+ MS depuis le serveur de localisation (LOC), vers le noeud SGSN (SGSN) ;
j) envoyer les informations de localisation du dispositif terminal (MS) à partir du noeud SGSN (SGSN), vers le serveur de localisation (LOC), dans un message de réponse BSSAP+ MS ; et
k) transmettre les informations de localisation reçues à partir du serveur de localisation (LOC), vers le prestataire de services (SP).

2. Procédé selon la revendication 1, **caractérisé en ce que**, à l'étape c), un message RADIUS est envoyé à partir d'un noeud GGSN (GGSN), à l'aide du protocole RADIUS, vers un programme de serveur RADIUS qui contient l'adresse IP attribuée au contexte PDP, et l'identifiant d'abonné de l'utilisateur du GPRS dispositif terminal (MS).

3. Procédé selon la revendication 1, **caractérisé en ce que**, à l'étape c), un tunnel GTP situé entre le noeud SGSN (SGSN) et le noeud GGSN (GGSN) est surveillé à l'aide du serveur de localisation (LOC), et des paires d'identifiant d'abonné/d'adresse IP sont récupérées à partir de ce point, lors de la phase de création du contexte PDP.

4. Procédé selon la revendication 1, **caractérisé en ce que**, à l'étape c), la paire d'identifiant d'abonné/d'adresse IP est envoyée à partir du noeud SGSN (SGSN), vers le serveur de localisation (LOC).

5. Procédé selon la revendication 1, **caractérisé en ce que** l'identifiant d'abonné associé au contexte PDP et l'adresse IP sont supprimés de la base de données (DB), lorsque le contexte PDP est dégagé.

6. Procédé selon la revendication 1, **caractérisé en ce que** l'identifiant d'abonné comprend un numéro MSISDN.

7. Procédé selon la revendication 1, **caractérisé en ce que** les informations de localisation comprennent un identifiant CellID.

8. Procédé d'obtention d'informations de localisation d'un dispositif terminal (MS) d'un réseau GPRS, ledit procédé comprenant les étapes consistant à :
a) créer un contexte PDP associé à l'ouverture d'une connexion de transmission de données ;
b) envoyer une requête de service dépendant de la localisation à un prestataire de services à l'aide du dispositif terminal (MS) ;
c) déterminer l'adresse IP attribuée au contexte PDP, et l'identifiant d'abonné de l'utilisateur du dispositif terminal (MS) ;
d) enregistrer l'adresse IP attribuée au contexte PDP, et l'identifiant d'abonné de l'utilisateur du dispositif terminal (MS) dans une base de données (DB) ;
**caractérisé en ce que** le procédé comprend en outre les étapes consistant à:
e) envoyer une demande de la part du prestataire de services (SP), qui contient l'adresse IP attribuée au contexte PDP ;
f) rechercher l'identifiant d'abonné associé à l'adresse IP dans la base de données, sur la base de la demande ;
g) envoyer, à partir d'un serveur de localisation (LOC), et vers un registre de localisation nominal (HLR), un message ATI conforme au protocole MAP, qui contient l'identifiant d'abonné de l'utilisateur du dispositif terminal (MS) ;
h) envoyer une demande PSI conforme au protocole MAP à partir du registre de localisation nominal (HLR), vers un registre de localisation visiteur (VLR) ;
i) envoyer un message de requête d'informations BSSAP+ MS à partir du registre de localisation visiteur (VLR), vers un noeud SGSN (SGSN) ;
j) envoyer un message de réponse BSSAP+ MS du dispositif terminal (MS), à partir du noeud SGSN (SGSN), vers le registre de localisation visiteur (VLR);
k) envoyer, à partir du registre de localisation visiteur (VLR), et vers le registre de localisation nominal (HLR), un message de réponse PSI conforme au protocole MAP, qui contient les informations de localisation ;
l) envoyer, à partir du registre de localisation nominal (HLR), et vers le serveur de localisation (LOC), un message de réponse ATI conforme au protocole MAP, qui contient les informations de localisation, et
m) transmettre les informations de localisation à partir du serveur de localisation (LOC), vers le prestataire de services (SP).

9. Procédé selon la revendication 8, **caractérisé en ce que**, à l'étape c), un message RADIUS est envoyé à partir d'un noeud GGSN (GGSN), à l'aide du protocole RADIUS, vers le programme de serveur RADIUS qui contient l'adresse IP attribuée au contexte PDP, et l'identifiant d'abonné de l'utilisateur du dispositif terminal (MS).

10. Procédé selon la revendication 8, **caractérisé en ce que**, à l'étape c), le tunnel GTP situé entre le noeud SGSN (SGSN) et le noeud GGSN (GGSN) est surveillé à l'aide du serveur de localisation (LOC), et des paires d'identifiant d'abonné/d'adresse IP sont récupérées lors de la phase de création du contexte PDP.

11. Procédé selon la revendication 8, **caractérisé en ce que**, à l'étape c), la paire d'identifiant d'abonné/d'adresse IP est envoyée à partir du noeud SGSN (SGSN), vers le serveur de localisation (LOC).

12. Procédé selon la revendication 8, **caractérisé en ce que** l'identifiant d'abonné associé au contexte PDP et l'adresse IP sont supprimés de la base de données (DB), lorsque le contexte PDP est dégagé.

13. Procédé selon la revendication 8, **caractérisé en ce que**, à l'étape g) et 1), le message ATI est remplacé par un message SRI conforme au protocole MAP.

14. Procédé selon la revendication 8, **caractérisé en ce que** l'identifiant d'abonné comprend un numéro MSISDN.

15. Procédé selon la revendication 8, **caractérisé en ce que** les informations de localisation comprennent un identifiant CellID.

16. Procédé d'obtention d'informations de localisation d'un dispositif terminal (MS) d'un réseau GPRS, ledit procédé comprenant les étapes consistant à :
a) créer un contexte PDP associé à l'ouverture d'une connexion de transmission de données ;
b) envoyer une requête de service dépendant de la localisation à un prestataire de services (SP) à l'aide du dispositif terminal (MS) ;
c) déterminer l'adresse IP attribuée au contexte PDP, et l'identifiant d'abonné de l'utilisateur du dispositif terminal (MS) ;
d) enregistrer l'adresse IP attribuée au contexte PDP, et l'identifiant d'abonné de l'utilisateur du dispositif terminal (MS) dans une base de données (DB) ;
**caractérisé en ce que** le procédé comprend en outre les étapes consistant à:
e) envoyer une demande de la part du prestataire de services (SP), qui contient l'adresse IP attribuée au contexte PDP ;
f) rechercher l'identifiant d'abonné associé à l'adresse IP dans la base de données, sur la base de la demande ;
g) rechercher l'identifiant IMSI et l'adresse d'un centre de commutation mobile de desserte (MSC) dans un registre de localisation nominal (HLR), sur la base de l'identifiant d'abonné, à l'aide d'un serveur de localisation (LOC) ;
h) envoyer un message court à partir du serveur de localisation (LOC), vers le dispositif terminal (MS), via une connexion à commutation par circuits ;
i) envoyer un message ATI conforme au protocole MAP, à partir du serveur de localisation (LOC), vers le registre de localisation nominal (HLR), le message ATI contenant l'identifiant d'abonné de l'utilisateur du dispositif terminal (MS) ;
j) envoyer une demande PSI conforme au protocole MAP, à partir du registre de localisation nominal (HLR), vers un registre de localisation visiteur (VLR) ;
k) envoyer un message de réponse PSI conforme au protocole MAP, à partir du registre de localisation visiteur (VLR), vers un registre de localisation nominal (HLR), le message de réponse PSI contenant les informations de localisation ;
l) envoyer un message de réponse ATI conforme au protocole MAP à partir du registre de localisation nominal (HLR), vers le serveur de localisation (LOC), le message de réponse ATI contenant les informations de localisation ; et
m) transmettre les informations de localisation à partir du serveur de localisation (LOC), vers le prestataire de services (SP).

17. Procédé selon la revendication 16, **caractérisé en ce que**, à l'étape c), un message RADIUS est envoyé à partir d'un noeud GGSN (GGSN), à l'aide du protocole RADIUS, vers un programme de serveur RADIUS qui contient l'adresse IP attribuée au contexte PDP, et l'identifiant d'abonné de l'utilisateur du dispositif terminal (MS).

18. Procédé selon la revendication 16, **caractérisé en ce que**, à l'étape c), un tunnel GTP situé entre le noeud SGSN (SGSN) et un noeud GGSN (GGSN) est surveillé à l'aide du serveur de localisation (LOC), et des paires d'identifiant d'abonné/d'adresse IP sont récupérées à partir de ce point, lors de la phase de création du contexte PDP.

19. Procédé selon la revendication 16, **caractérisé en ce que**, à l'étape c), la paire d'identifiant d'abonné/d'adresse IP est envoyée à partir du noeud SGSN (SGSN), vers le serveur de localisation (LOC).

20. Procédé selon la revendication 16, **caractérisé en ce que**, à l'étape i) et 1), le message ATI est remplacé par un message SRI conforme au protocole MAP.

21. Procédé selon la revendication 16, **caractérisé en ce que**, si, à l'étape h), le bit MMS est activé dans le message court, alors, avant l'étape m) :
un message MAP de coupure est envoyé à partir du serveur de localisation (LOC), vers le centre de commutation mobile (MSC).

22. Procédé selon la revendication 16, **caractérisé en ce que** l'identifiant d'abonné associé au contexte PDP et l'adresse IP sont supprimés de la base de données (DB), lorsque le contexte PDP est dégagé.

23. Procédé selon la revendication 16, **caractérisé en ce que** l'identifiant d'abonné comprend un numéro MSISDN.

24. Procédé selon la revendication 16, **caractérisé en ce que** les informations de localisation comprennent un identifiant CellID.

25. Serveur de localisation permettant d'obtenir des informations de localisation d'un dispositif terminal (MS) d'un réseau de télécommunications,
**caractérisé en ce que** le serveur de localisation comprend :
un moyen de message (IP) configuré pour recevoir une demande de la part d'un prestataire de services (SP), la demande contenant l'adresse IP attribuée au contexte PDP, pour déterminer l'identifiant d'abonné associé à l'adresse IP à partir d'une base de données (DB), sur la base de la demande, et pour transmettre les informations de localisation reçues au prestataire de services (SP) ; et
une interface de signalisation (SS7) configurée pour rechercher l'identifiant IMSI dans un registre de localisation nominal (HLR), sur la base de l'identifiant d'abonné, pour rechercher un noeud SGSN (SGSN) desservant le dispositif terminal (MS) dans le registre de localisation nominal (HLR), pour envoyer un message de demande d'informations BSSAP+ MS au noeud SGSN (SGSN), et pour recevoir les informations de localisation du dispositif terminal de la part du noeud SGSN (SGSN) dans un message de réponse BSSAP+ MS.

26. Serveur de localisation selon la revendication 25, **caractérisé en ce que** le serveur de localisation comprend la base de données (DB) destinée à enregistrer les paires d'identifiant d'abonné/d'adresse IP.

27. Serveur de localisation selon la revendication 25, **caractérisé en ce que** le serveur de localisation comprend des moyens d'acquisition de données (DM) destinés à rechercher la paire d'identifiant d'abonné/d'adresse IP associée à l'utilisateur du dispositif terminal (MS).

28. Serveur de localisation selon la revendication 25, **caractérisé en ce que** le serveur de localisation comprend un moyen de message (IP) destiné à rechercher la paire d'identifiant d'abonné/d'adresse IP dans la base de données (DB).

29. Serveur de localisation selon la revendication 27, **caractérisé en ce que** les moyens d'acquisition de données (DM) sont utilisés pour se rapporter à un programme de serveur RADIUS.

30. Serveur de localisation selon la revendication 27, **caractérisé en ce que** les moyens d'acquisition de données (DM) sont utilisés pour se rapporter à un collecteur de données qui est utilisé pour surveiller un tunnel GTP (GTP) situé entre le noeud SGSN (SGSN) et un noeud GGSN (GGSN).

31. Serveur de localisation selon la revendication 25, **caractérisé en ce que** l'identifiant d'abonné comprend un numéro MSISDN.

32. Serveur de localisation selon la revendication 25, **caractérisé en ce que** les informations de localisation comprennent un identifiant CellID.

33. Serveur de localisation permettant d'obtenir des informations de localisation d'un dispositif terminal (MS) d'un réseau de télécommunications,
**caractérisé en ce que** le serveur de localisation comprend :
un moyen de message (IP) configuré pour recevoir une demande de la part d'un prestataire de services (SP), qui contient l'adresse IP attribuée au contexte PDP, pour déterminer l'identifiant d'abonné associé à l'adresse IP à partir d'une base de données (DB), sur la base de la demande, et pour transmettre les informations de localisation reçues au prestataire de services (SP) ; et
une interface de signalisation (SS7) configurée pour envoyer à un registre de localisation nominal (HLR) un message ATI conforme au protocole MAP, qui contient l'identifiant d'abonné de l'utilisateur du dispositif terminal (MS), et pour recevoir, de la part du registre de localisation nominal (HLR), un message de réponse ATI conforme au protocole MAP, qui contient les informations de localisation.

34. Serveur de localisation selon la revendication 33, **caractérisé en ce que** le serveur de localisation comprend la base de données (DB) destinée à enregistrer les paires d'identifiant d'abonné/d'adresse IP.

35. Serveur de localisation selon la revendication 33, **caractérisé en ce que** le serveur de localisation comprend un moyen de message (IP) destiné à rechercher la paire d'identifiant d'abonné/d'adresse IP dans la base de données (DB).

36. Serveur de localisation selon la revendication 33, **caractérisé en ce que** l'interface de signalisation (SS7) est configurée pour remplacer le message ATI par un message SRI conforme au protocole MAP.

37. Serveur de localisation selon la revendication 33, **caractérisé en ce que** l'identifiant d'abonné comprend un numéro MSISDN.

38. Serveur de localisation selon la revendication 33, **caractérisé en ce que** les informations de localisation comprennent un identifiant CellID.

39. Serveur de localisation selon la revendication 33, **caractérisé en ce que** le serveur de localisation comprend des moyens d'acquisition de données (DM) destinés à rechercher la paire d'identifiant d'abonné/d'adresse IP associée à l'utilisateur du dispositif terminal (MS).

40. Serveur de localisation selon la revendication 39, **caractérisé en ce que** les moyens d'acquisition de données (DM) sont utilisés pour se rapporter à un programme de serveur RADIUS.

41. Serveur de localisation selon la revendication 39, **caractérisé en ce que** les moyens d'acquisition de données (DM) sont utilisés pour se rapporter à un collecteur de données qui est utilisé pour surveiller un tunnel GTP (GTP) situé entre le noeud SGSN (SGSN) et un noeud GGSN (GGSN).

42. Serveur de localisation permettant d'obtenir des informations de localisation d'un dispositif terminal (MS) d'un réseau de télécommunications,
**caractérisé en ce que** le serveur de localisation comprend :
un moyen de message (IP) configuré pour recevoir une demande d'informations de localisation qui contient un identifiant d'abonné mobile, et pour transmettre les informations de localisation à un prestataire de services (SP) ; et
une interface de signalisation (SS7) configurée pour rechercher l'identifiant IMSI et l'adresse d'un centre de commutation mobile de desserte (MSC) dans un registre de localisation nominal (HLR), sur la base de l'identifiant d'abonné, pour envoyer un message court au dispositif terminal (MS), via une connexion à commutation par circuits, pour envoyer un message ATI, conforme au protocole MAP au registre de localisation nominal (HLR), le message ATI contenant l'identifiant d'abonné de l'utilisateur du dispositif terminal (MS), et pour recevoir un message de réponse ATI conforme au protocole MAP de la part du registre de localisation nominal (HLR), le message de réponse ATI contenant les informations de localisation.

43. Serveur de localisation selon la revendication 42, **caractérisé en ce que** le serveur de localisation comprend la base de données (DB) destinée à enregistrer les paires d'identifiant d'abonné/d'adresse IP.

44. Serveur de localisation selon la revendication 42, **caractérisé en ce que** l'interface de signalisation (SS7) est configurée pour remplacer le message ATI par un message SRI conforme au protocole MAP.

45. Serveur de localisation selon la revendication 42, **caractérisé en ce que**, si le bit MMS est activé dans le message court, l'interface de signalisation (SS7) est configurée pour envoyer un message MAP de coupure au centre de commutation mobile, avant de transmettre les informations de localisation au prestataire de services (SP).

46. Serveur de localisation selon la revendication 42, **caractérisé en ce que** l'identifiant d'abonné comprend un numéro MSISDN.

47. Serveur de localisation selon la revendication 42, **caractérisé en ce que** les informations de localisation comprennent un identifiant CellID.

48. Serveur de localisation selon la revendication 42, **caractérisé en ce que** le serveur de localisation comprend des moyens d'acquisition de données (DM) destinés à rechercher la paire d'identifiant d'abonné/d'adresse IP associée à l'utilisateur du dispositif terminal (MS).

49. Serveur de localisation selon la revendication 48, **caractérisé en ce que** les moyens d'acquisition de données (DM) sont utilisés pour se rapporter à un programme de serveur RADIUS.

50. Serveur de localisation selon la revendication 48, **caractérisé en ce que** les moyens d'acquisition de données (DM) sont utilisés pour se rapporter à un collecteur de données qui est utilisé pour surveiller un tunnel GTP (GTP) situé entre le noeud SGSN (SGSN) et un noeud GGSN (GGSN).

51. Système d'obtention d'informations de localisation d'un dispositif terminal d'un réseau GPRS, ledit système comprenant :
un noeud SGSN (SGSN) ;
un noeud GGSN (GGSN), qui est relié au noeud SGSN (SGSN) ;
un tunnel GTP (GTP), qui est situé entre le noeud SGSN (SGSN) et le noeud GGSN (GGSN) ;
un prestataire de services (SP), qui communique avec le noeud GGSN (GGSN) ;
un dispositif terminal (MS), qui communique avec le noeud SGSN (SGSN) ;
un registre de localisation nominal (HLR) ;
un registre de localisation visiteur (VLR), qui communique avec le registre de localisation nominal (HLR) et avec le noeud SGSN (SGSN) ;
un centre de commutation mobile (MSC) qui communique avec le registre de localisation visiteur (VLR) ;
des moyens d'acquisition de données (DM) destinés à rechercher la paire d'identifiant d'abonné/d'adresse IP associée à l'utilisateur du dispositif terminal (MS) ;
une base de données (DB) destinée à enregistrer les paires d'identifiant d'abonné/d'adresse IP obtenues en utilisant les moyens d'acquisition de données (DM) ;
**caractérisé en ce que** le système comprend en outre :
un serveur de localisation (LOC) qui comprend :
un moyen de message (IP) configuré pour recevoir une demande de la part du prestataire de services (SP), la demande contenant l'adresse IP attribuée au contexte PDP, pour déterminer l'identifiant d'abonné associé à l'adresse IP à partir de la base de données (DB), sur la base de la demande, et pour transmettre les informations de localisation reçues au prestataire de services (SP) ; et
une interface de signalisation (SS7) configurée pour rechercher l'identifiant IMSI dans le registre de localisation nominal (HLR), sur la base de l'identifiant d'abonné, pour rechercher le noeud SGSN (SGSN) desservant le dispositif terminal (MS) dans le registre de localisation nominal (HLR), pour envoyer un message de demande d'informations BSSAP+ MS au noeud SGSN (SGSN), et pour recevoir les informations de localisation du dispositif terminal (MS) de la part du noeud SGSN (SGSN), dans un message de réponse d'informations BSSAP+ MS ;
dans lequel le serveur de localisation est configuré pour poser en utilisant l'interface de signalisation (SS7) en tant qu'élément de réseau standard, vers les éléments de réseau susmentionnés.

52. Système selon la revendication 51, **caractérisé en ce que** le serveur de localisation (LOC) comprend la base de données (DB) destinée à enregistrer les paires d'identifiant d'abonné/d'adresse IP.

53. Système selon la revendication 51, **caractérisé en ce que** le serveur de localisation (LOC) comprend un moyen de message (IP) destiné à rechercher les paires d'identifiant d'abonné/d'adresse IP dans la base de données (DB).

54. Système selon la revendication 51, **caractérisé en ce que** le serveur de localisation (LOC) comprend des moyens d'acquisition de données (DM) destinés à rechercher la paire d'identifiant d'abonné/d'adresse IP associée à l'utilisateur du dispositif terminal.

55. Système selon la revendication 54, **caractérisé en ce que** les moyens d'acquisition de données (DM) sont utilisés pour se rapporter à un programme de serveur RADIUS.

56. Système selon la revendication 54, **caractérisé en ce que** les moyens d'acquisition de données (DM) sont utilisés pour se rapporter à un collecteur de données qui est utilisé pour surveiller le tunnel GTP (GTP) situé entre le noeud SGSN (SGSN) et le noeud GGSN (GGSN).

57. Système selon la revendication 51, **caractérisé en ce que** le noeud SGSN (SGSN) comprend un moyen de transmission de données (MM) destiné à envoyer la paire d'identifiant d'abonné/d'adresse IP au serveur de localisation (LOC).

58. Système selon la revendication 51, **caractérisé en ce que** l'identifiant d'abonné comprend un numéro MSISDN.

59. Système selon la revendication 51, **caractérisé en ce que** les informations de localisation comprennent un identifiant CellID.

60. Système d'obtention d'informations de localisation d'un dispositif terminal d'un réseau GPRS, ledit système comprenant :
un noeud SGSN (SGSN) ;
un noeud GGSN (GGSN), qui est relié au noeud SGSN (SGSN) ;
un tunnel GTP (GTP), qui est situé entre le noeud SGSN (SGSN) et le noeud GGSN (GGSN) ;
un prestataire de services (SP), qui communique avec le noeud GGSN (GGSN) ;
un dispositif terminal (MS), qui communique avec le noeud SGSN (SGSN) ;
un registre de localisation nominal (HLR) ;
un registre de localisation visiteur (VLR), qui communique avec le registre de localisation nominal (HLR) et avec le noeud SGSN (SGSN) ;
un centre de commutation mobile (MSC) qui communique avec le registre de localisation visiteur (VLR) ;
des moyens d'acquisition de données (DM) destinés à rechercher la paire d'identifiant d'abonné/d'adresse IP associée à l'utilisateur du dispositif terminal (MS);
une base de données (DB) destinée à enregistrer les paires d'identifiant d'abonné/d'adresse IP obtenues en utilisant les moyens d'acquisition de données (DM) ;
**caractérisé en ce que** le système comprend en outre :
un serveur de localisation (LOC) qui comprend :
un moyen de message (IP) configuré pour recevoir une demande de la part du prestataire de services (SP), qui contient l'adresse IP attribuée au contexte PDP, pour rechercher l'identifiant d'abonné associé à l'adresse IP dans la base de données (DB) sur la base de la demande, et pour transmettre les informations de localisation au prestataire de services (SP) ; et
une interface de signalisation (SS7) configurée pour envoyer au registre de localisation nominal (HLR) un message ATI conforme au protocole MAP, qui contient l'identifiant d'abonné de l'utilisateur du dispositif terminal (MS), et pour recevoir, de la part du registre de localisation nominal HLR), un message de réponse ATI conforme au protocole MAP, qui contient les informations de localisation ;
dans lequel le serveur de localisation est configuré pour poser en utilisant l'interface de signalisation (SS7) en tant qu'élément de réseau standard, vers les éléments de réseau susmentionnés.

61. Système selon la revendication 60, **caractérisé en ce que** le serveur de localisation (LOC) comprend la base de données (DB) destinée à enregistrer les paires d'identifiant d'abonné/d'adresse IP.

62. Système selon la revendication 60, **caractérisé en ce que** le serveur de localisation (LOC) comprend un moyen de message (IP) destiné à rechercher les paires d'identifiant d'abonné/d'adresse IP dans la base de données (DB).

63. Système selon la revendication 60, **caractérisé en ce que** le serveur de localisation (LOC) comprend des moyens d'acquisition de données (DM) destinés à rechercher la paire d'identifiant d'abonné/d'adresse IP associée à l'utilisateur du dispositif terminal (MS).

64. Système selon la revendication 63, **caractérisé en ce que** les moyens d'acquisition de données (DM) sont utilisés pour se rapporter à un programme de serveur RADIUS.

65. Système selon la revendication 63, **caractérisé en ce que** les moyens d'acquisition de données (DM) sont utilisés pour se rapporter à un collecteur de données qui est utilisé pour surveiller le tunnel GTP (GTP) situé entre le noeud SGSN (SGSN) et le noeud GGSN (GGSN).

66. Système selon la revendication 60, **caractérisé en ce que** le noeud SGSN (SGSN) comprend un moyen de transmission de données (MM) destiné à envoyer la paire d'identifiant d'abonné/d'adresse IP au serveur de localisation (LOC).

67. Système selon la revendication 60, **caractérisé en ce que** l'identifiant d'abonné comprend un numéro MSISDN.

68. Système selon la revendication 60, **caractérisé en ce que** les informations de localisation comprennent un identifiant CellID.

69. Système d'obtention d'informations de localisation d'un dispositif terminal d'un réseau GPRS, ledit système comprenant :
un noeud SGSN (SGSN);
un noeud GGSN (GGSN), qui est relié au noeud SGSN (SGSN) ;
un tunnel GTP (GTP), qui est situé entre le noeud SGSN (SGSN) et le noeud GGSN (GGSN) ;
un prestataire de services (SP), qui communique avec le noeud GGSN (GGSN) ;
un dispositif terminal (MS), qui communique avec le noeud SGSN (SGSN) ;
un registre de localisation nominal (HLR) ;
un registre de localisation visiteur (VLR), qui communique avec le registre de localisation nominal (HLR) et avec le noeud SGSN (SGSN) ;
un centre de commutation mobile (MSC) qui communique avec le registre de localisation visiteur (VLR) ;
des moyens d'acquisition de données (DM) destinés à rechercher la paire d'identifiant d'abonné/d'adresse IP associée à l'utilisateur du dispositif terminal (MS) ;
une base de données (DB) destinée à enregistrer les paires d'identifiant d'abonné/d'adresse IP obtenues en utilisant les moyens d'acquisition de données (DM) ;
**caractérisé en ce que** le système comprend en outre :
un serveur de localisation (LOC) qui comprend :
un moyen de message (IP) configuré pour recevoir une demande d'informations de localisation qui contient un identifiant d'abonné mobile, pour transmettre des informations de localisation au prestataire de services (SP) ; et
une interface de signalisation (SS7) configurée pour rechercher l'identifiant IMSI et l'adresse du centre de commutation mobile de desserte (MSC) dans le registre de localisation nominal (HLR), sur la base de l'identifiant d'abonné, pour envoyer un message court au dispositif terminal (MS), via une connexion à commutation par circuits, pour envoyer un message ATI conforme au protocole MAP au registre de localisation nominal (HLR), le message ATI contenant l'identifiant d'abonné de l'utilisateur du dispositif terminal (MS), et pour recevoir un message de réponse ATI conforme au protocole MAP, de la part du registre de localisation nominal (HLR), le message de réponse ATI contenant les informations de localisation ;
dans lequel le serveur de localisation est configuré pour poser en utilisant l'interface de signalisation (SS7) en tant qu'élément de réseau standard, vers les éléments de réseau susmentionnés.

70. Système selon la revendication 69, **caractérisé en ce que** le serveur de localisation (LOC) comprend la base de données (DB) destinée à enregistrer les paires d'identifiant d'abonné/d'adresse IP.

71. Système selon la revendication 69, **caractérisé en ce que** le serveur de localisation (LOC) comprend un moyen de message (IP) destiné à rechercher les paires d'identifiant d'abonné/d'adresse IP dans la base de données (DB).

72. Système selon la revendication 69, **caractérisé en ce que** le serveur de localisation (LOC) comprend des moyens d'acquisition de données (DM) destinés à rechercher la paire d'identifiant d'abonné/d'adresse IP associée à l'utilisateur du dispositif terminal (MS).

73. Système selon la revendication 72, **caractérisé en ce que** les moyens d'acquisition de données (DM) sont utilisés pour se rapporter un programme de serveur RADIUS.

74. Système selon la revendication 72, **caractérisé en ce que** les moyens d'acquisition de données (DM) sont utilisés pour se rapporter à un collecteur de données qui est utilisé pour surveiller le tunnel GTP (GTP) situé entre le noeud SGSN (SGSN) et le noeud GGSN (GGSN).

75. Système selon la revendication 69, **caractérisé en ce que** le noeud SGSN (SGSN) comprend un moyen de transmission de données (MM) destiné à envoyer la paire d'identifiant d'abonné/d'adresse IP au serveur de localisation (LOC).

76. Système selon la revendication 69, **caractérisé en ce que** l'identifiant d'abonné comprend un numéro MSISDN.

77. Système selon la revendication 69, **caractérisé en ce que** les informations de localisation comprennent un identifiant CellID.

## Patentansprüche

1. Verfahren zum Erhalten einer Positionsinformation einer Endgeräteeinrichtung (MS) eines GPRS-Netzwerkes, wobei das Verfahren die folgenden Schritte aufweist:
a) Erzeugen eines PDP-Kontextes, welcher mit der Öffnung einer Datenübertragungsverbindung verbunden ist;
b) Senden einer positionsabhängigen Service- bzw. Dienstanforderung an einen Service- bzw. Dienst-Provider (SP), wobei die Endgeräteeinrichtung (MS) benutzt wird;
c) Bestimmen der IP-Adresse, welche dem PDP-Kontext und der Teilnehmerkennung des Nutzers der Endgeräteeinrichtung (MS) zugewiesen ist;
d) Speichern der IP-Adresse, welche dem PDP-Kontext und der Teilnehmerkennung des Nutzers der Endgeräteeinrichtung (MS) zugewiesen ist, in einer Datenbank (DB) ;
**dadurch gekennzeichnet, dass** das Verfahren ferner die folgenden Schritte aufweist:
e) Senden einer Anforderung von dem Service-Provider (SP), welche die dem PDP-Kontext zugewiesene IP Adresse beinhaltet;
f) Herausfinden der Teilnehmerkennung, welche mit der IP-Adresse verbunden ist, von der Datenbank basierend auf der Anfrage;
g) Herausfinden der IMSI-Kennung von einem Heimatregister (HLR) basierend auf der Teilnehmerkennung, wobei ein Positionier-Server (LOC) benutzt wird;
h) Herausfinden eines SGSN-Knotens (SGSN), welcher die Endgeräteeinrichtung (MS) von dem Heimatregister (HLR) aus bedient, wobei der Positions-Server (LOC) benutzt wird;
i) Senden einer BSSAP+ MS-Informationsanforderungsnachricht von dem Positions-Server (LOC) an den SGSN-Knoten (SGSN) ;
j) Senden einer Positionsinformation an die Endgeräteeinrichtung (MS) von dem SGSN-Knoten (SGSN) an den Positions-Server (LOC) in einer BSSAP+ MS-Informationsrückmeldungsnachricht; und
k) Übertragen der empfangenen Positionsinformation von dem Positions-Server (LOC) an den Service-Provider (SP) .

2. Verfahren nach Anspruch 1, **dadurch gekennzeichnet, dass** beim Schritt c) von einem GGSN-Knoten (GGSN) mit Hilfe eines Radius-Protokolls eine Radiusnachricht an ein Radius-Server-Programm gesendet wird, welche die IP-Adresse enthält, welche dem PDP-Kontext und der Teilnehmerkennung des Nutzers der GPRS Endgeräteeinrichtung (MS) zugewiesen ist.

3. Verfahren nach Anspruch 1, **dadurch gekennzeichnet, dass** bei Schritt c) ein GTP-Tunnel zwischen dem SGSN-Knoten (SGSN) und einem GGSN-Knoten (GGSN) mit Hilfe des Positions-Servers (LOC) überwacht wird und Teilnehmerkennung/IP-Adressenpaare von dort in der Gestaltungsphase des PDP-Kontext aufgenommen wird/ werden.

4. Verfahren nach Anspruch 1, **dadurch gekennzeichnet, dass** beim Schritt c) die Teilnehmerkennung/das IP-Adressenpaar von dem SGSN-Knoten (SGSN) an den Positions-Server (LOC) gesandt wird.

5. Verfahren nach Anspruch 1, **dadurch gekennzeichnet, dass** die Teilnehmerkennung, welche mit dem PDP-Kontext und der IP-Adresse verbunden ist, von der Datenbank (DB) gelöscht wird, wenn der PDP-Kontext freigegeben wird.

6. Verfahren nach Anspruch 1, **dadurch gekennzeichnet, dass** die Teilnehmerkennung eine MSISDN-Nummer aufweist.

7. Verfahren nach Anspruch 1, **dadurch gekennzeichnet, dass** die Positionsinformation eine CellID-Kennung aufweist.

8. Verfahren zum Erhalten einer Positionsinformation von einer Endgeräteeinrichtung (MS) eines GPRS-Netzwerks, wobei das Verfahren die folgenden Schritte aufweist:
a) Schaffen eines PDP-Kontextes, welcher mit dem Öffnen einer Datenübertragungsverbindung verbunden ist;
b) Senden einer positionsabhängigen Service-Anforderung an einen Service-Provider mit Hilfe der Endgeräteeinrichtung (MS);
c) Bestimmen der IP-Adresse, welche dem PDP-Kontext und der Teilnehmerkennung des Nutzers der Endgeräteeinrichtung (MS) zugewiesen ist;
d) Speichern der IP-Adresse, welche dem PDP-Kontext und der Teilnehmerkennung des Nutzers der Endgeräteeinrichtung (MS) zugewiesen ist, in einer Datenbank (DB);
**dadurch gekennzeichnet, dass** das Verfahren ferner die folgenden Schritte aufweist:
e) Senden einer Anforderung von dem Service-Provider (SP), welche die IP-Adresse beinhaltet, welche dem PDP-Kontext zugewiesen ist;
f) Herausfinden der Teilnehmerkennung, welche mit der IP-Adresse verbunden ist, von der Datenbank (DB), basierend auf der Anforderung;
g) Senden einer ATI-Nachricht von einem Positions-Server (LOC) an ein Heimatregister (HLR), welche mit dem MAP-Protokoll übereinstimmt, welche die Teilnehmerkennung des Nutzers der Endgeräteeinrichtung (MS) enthält;
h) Senden einer PSI-Anforderung, welche mit dem MAP-Protokoll übereinstimmt, von dem Heimatregister (HLR) an ein Besucherregister (VLR);
i) Senden einer BSSAP+ MS-Informationsanforderungsnachricht von dem Besucherregister (VLR) an einen SGSN-Knoten (SGSN);
j) Senden einer BSSAP+ MS-Informationsantwortnachricht der Endgeräteeinrichtung (MS) von dem SGSN-Knoten (SGSN) an das Besucherregister (VLR);
k) Senden einer PSI-Antwortnachricht von dem Besucherregister (VLR) an das Heimatregister (HLR), welche mit dem MAP-Protokoll übereinstimmt, welches die Positionsinformation enthält;
l) Senden einer ATI-Antwortnachricht von dem Heimatregister (HLR) an den Positions-Server (LOC), welche mit dem MAP-Protokoll übereinstimmt, welche die Positionsinformation enthält, und
m) Übertragen der Positionsinformation von dem Positions-Server (LOC) an den Service-Provider (SP).

9. Verfahren nach Anspruch 8, **dadurch gekennzeichnet, dass** beim Schritt c) von einem GGSN-Knoten (GGSN) mit Hilfe des Radiusprotokolls eine Radiusnachricht an das Radius-Server- bzw. -Dienstprogramm gesendet wird, welche die IP-Adresse enthält, welche dem PDP-Kontext und der Teilnehmerkennung des Nutzers der Endgeräteeinrichtung (MS) zugewiesen ist.

10. Verfahren nach Anspruch 8, **dadurch gekennzeichnet, dass** beim Schritt c) der GTP-Tunnel zwischen dem SGSN-Knoten (SGSN) und dem GGSN-Knoten (GGSN) mit Hilfe des Positions-Servers (LOC) überwacht wird und die Teilnehmerkennung/IP-Adressenpaare in der Erstellungsphase des PDP-Kontexts aufgenommen werden.

11. Verfahren nach Anspruch 8, **dadurch gekennzeichnet, dass** beim Schritt c) die Teilnehmerkennung/das IP-Adressenpaar von dem SGSN-Knoten (SGSN) an den Positions-Server (LOC) gesendet wird.

12. Verfahren nach Anspruch 8, **dadurch gekennzeichnet, dass** die Teilnehmerkennung, welche mit dem PDP-Kontext und der IP-Adresse verbunden ist, von der Datenbank (DB) gelöscht wird, wenn der PDP-Kontext freigegeben wird.

13. Verfahren nach Anspruch 8, **dadurch gekennzeichnet, dass** bei den Schritten g) und l) die ATI-Nachricht mit einer mit dem MAP-Protokoll übereinstimmenden SRI-Nachricht substituiert wird.

14. Verfahren nach Anspruch 8, **dadurch gekennzeichnet, dass** die Teilnehmerkennung eine MSISDN-Nummer aufweist.

15. Verfahren nach Anspruch 8, **dadurch gekennzeichnet, dass** die Positionsinformation eine CellID-Kennung aufweist.

16. Verfahren zum Erhalten der Positionsinformation einer Endgeräteeinrichtung (MS) eines GPRS-Netzwerks, wobei das Verfahren die folgenden Schritte aufweist:
a) Schaffen eines PDP-Kontextes, welcher mit dem Öffnen einer Datenübertragungsverbindung verbunden ist;
b) Senden einer ortsabhängigen Serviceanforderung an einen Service-Provider (SP) mit Hilfe der Endgeräteeinrichtung (MS);
c) Bestimmen der IP-Adresse, welche dem PDP-Kontext und der Teilnehmerkennung des Nutzers der Endgeräteeinrichtung (MS) zugewiesen ist;
d) Speichern der IP-Adresse, welche dem PDP-Kontext und der Teilnehmerkennung des Nutzers der Endgeräteeinrichtung (MS) zugewiesen ist, in einer Datenbank (DB);
**dadurch gekennzeichnet, dass** das Verfahren ferner die folgenden Schritte aufweist:
e) Senden einer Anforderung von dem Service-Provider (SP), welche die IP-Adresse beinhaltet, welche dem PDP-Kontext zugewiesen ist;
f) Herausfinden der Teilnehmerkennung, welche mit der IP-Adresse verbunden ist, von der Datenbank (DB), basierend auf der Anforderung;
g) Herausfinden der IMSI-Kennung und der Adresse eines dienenden Mobilschaltzentrums (MSC) von einem Heimatregister (HLR) aus, basierend auf der Teilnehmerkennung mit Hilfe eines Positions-Servers (LOC) ;
h) Senden einer Kurznachricht von dem Positions-Server (LOC) an die Endgeräteeinrichtung (MS) über eine Schaltungsverbindung;
i) Senden einer ATI-Nachricht, welche mit dem MAP-Protokoll übereinstimmt, von dem Positions-Server (LOC) aus an das Heimatregister (HLR), wobei die ATI-Nachricht die Teilnehmerkennung des Nutzers der Endgeräteeinrichtung (MS) enthält;
j) Senden einer PSI-Anforderung, welche mit dem MAP-Protokoll übereinstimmt, von dem Heimatregister (HLR) aus an ein Besucherregister (VLR);
k) Senden einer PSI-Antwortnachricht, welche mit dem MAP-Protokoll übereinstimmt, von dem Besucherregister (VLR) aus an das Heimatregister (HLR), wobei die PSI-Antwortnachricht die Positionsinformation enthält;
l) Senden einer ATI-Antwortnachricht, welche mit dem MAP-Protokoll übereinstimmt, von dem Heimatregister (HLR) an den Positions-Server (LOC), wobei die ATI-Antwortnachricht die Positionsinformation enthält; und
m) Übertragen der Positionsinformation von dem Positions-Server (LOC) an den Service-Provider (SP).

17. Verfahren nach Anspruch 16, **dadurch gekennzeichnet, dass** beim Schritt c) mit Hilfe des Radiusprotokolls eine Radiusnachricht an ein Radius-Server-Programm gesendet wird, welche die IP-Adresse beinhaltet, welche dem PDP-Kontext und der Teilnehmerkennung des Nutzers der Endgeräteeinrichtung (MS) zugewiesen ist.

18. Verfahren nach Anspruch 16, **dadurch gekennzeichnet, dass** beim Schritt c) ein GTP-Tunnel zwischen dem SGSN-Knoten (SGSN) und einem GGSN-Knoten (GGSN) mit Hilfe des Positions-Servers (LOC) überwacht wird und Teilnehmerkennung/IP-Adressenpaare von dort in der Erstellungsphase des PDP-Kontextes aufgenommen werden.

19. Verfahren nach Anspruch 16, **dadurch gekennzeichnet, dass** beim Schritt c) die Teilnehmerkennung/das IP-Adressenpaar von dem SGSN-Knoten (SGSN) an den Positions-Server (LOC) gesandt wird.

20. Verfahren nach Anspruch 16, **dadurch gekennzeichnet, dass** bei den Schritten i) und l) die ATI-Nachricht durch eine SRI-Nachricht, welche mit dem MAP-Protokoll übereinstimmt, substituiert wird.

21. Verfahren nach Anspruch 16, **dadurch gekennzeichnet, dass**, falls beim Schritt h) das MMS-Bit in der Kurznachricht aktiviert wird, dann vor dem Schritt m):
eine MAP-Abbruchnachricht von dem Positions-Server (LOC) an das Mobilschaltzentrum (MSC) gesandt wird.

22. Verfahren nach Anspruch 16, **dadurch gekennzeichnet, dass** die Teilnehmerkennung, welche mit dem PDP-Kontext und der IP-Adresse verbunden ist, von der Datenbank (DB) gelöscht wird, wenn der PDP-Kontext freigegeben wird.

23. Verfahren nach Anspruch 16, **dadurch gekennzeichnet, dass** die Teilnehmerkennung eine MSISDN-Nummer aufweist.

24. Verfahren nach Anspruch 16, **dadurch gekennzeichnet, dass** die Positionsinformation eine CellID-Kennung aufweist.

25. Positions-Server zum Erhalten von Positionsinformation von einer Endgeräteeinrichtung (MS) eines Telekommunikationsnetzwerks,
**dadurch gekennzeichnet, dass** der Positions-Server aufweist:
eine Nachrichteneinrichtung (IP), welche konfiguriert ist, um eine Anforderung von einem Service-Provider (SP) zu empfangen, wobei die Anforderung die IP-Adresse beinhaltet, welche dem PDP-Kontext zugewiesen ist, um die Teilnehmerkennung zu bestimmen, welche mit der IP-Adresse zugewiesen ist, von einer Datenbank (DB), basierend auf der Anforderung, und um die empfangene Positionsinformation an den Service-Provider (SP) zu übertragen; und
ein Signalisier-Interface (SS7), welches so konfiguriert ist, dass es die IMSI-Kennung aus einem Heimatregister (HLR) herausfindet, basierend auf der Teilnehmerkennung, um einen SGSN-Knoten (SGSN) herauszufinden, welcher die Endgeräteeinrichtung (MS) vom Heimatregister (HLR) bedient, um eine BSSAP+ MS-Informationsanforderungsnachricht an den SGSN-Knoten (SGSN) zu senden, um Positionsinformation von der Endgeräteeinrichtung von dem SGSN-Knoten (SGSN) in einer BSSAP+ MS-Informationsantwortnachricht zu empfangen.

26. Positions-Server nach Anspruch 25, **dadurch gekennzeichnet, dass** der Positions-Server die Datenbank (DB) aufweist, um die Teilnehmerkennung/IP-Adressenpaare zu speichern.

27. Positions-Server nach Anspruch 25, **dadurch gekennzeichnet, dass** der Positions-Server eine Datenakquisitionseinrichtung (DM) aufweist, um die Teilnehmerkennung/das IP-Adressenpaar herauszufinden, welches mit dem Nutzer der Endgeräteeinrichtung (MS) verbunden ist.

28. Positions-Server nach Anspruch 25, **dadurch gekennzeichnet, dass** der Positions-Server eine Nachrichteneinrichtung (IP) aufweist, um die Teilnehmerkennung/das IP-Adressenpaar von der Datenbank (DB) wiederzugewinnen.

29. Positions-Server nach Anspruch 27, **dadurch gekennzeichnet, dass** die Datenakquisitionseinrichtung (DM) benutzt wird, um sich auf ein Radius-Server-Programm zu beziehen.

30. Positions-Server nach Anspruch 27, **dadurch gekennzeichnet, dass** die Datenakquisitionseinrichtung (DM) benutzt wird, um sich auf einen Datenkollektor zu beziehen, welcher benutzt wird, um einen GTP-Tunnel (GTP) zwischen dem SGSN-Knoten (SGSN) und einem GGSN-Knoten (GGSN) zu überwachen.

31. Positions-Server nach Anspruch 25, **dadurch gekennzeichnet, dass** die Teilnehmerkennung eine MSISDN-Nummer aufweist.

32. Positions-Server nach Anspruch 25, **dadurch gekennzeichnet, dass** die Positionsinformation eine CellID-Kennung aufweist.

33. Positions-Server für das Erhalten von Positionsinformation einer Endgeräteeinrichtung (MS) eines Telekommunikationsnetzwerkes,
**dadurch gekennzeichnet, dass** der Positions-Server aufweist:
eine Nachrichteneinrichtung (IP), welche so konfiguriert ist, dass sie eine Anforderung von einem Service-Provider (SP) empfängt, welche die IP-Adresse enthält, welche dem PDP-Kontext zugewiesen ist, um die Teilnehmerkennung herauszufinden, welche mit der IP-Adresse verbunden ist, von einer Datenbank (DB), basierend auf der Anforderung, und die Positionsinformation an den Service-Provider (SP) zu übertragen; und
ein Signalisier-Interface (SS7), welches so konfiguriert ist, dass es eine ATI-Nachricht an ein Heimatregister (HLR) sendet, welche mit dem MAP-Protokoll übereinstimmt, welche die Teilnehmerkennung des Nutzers der Endgeräteeinrichtung (MS) enthält, und um von dem Heimatregister (HLR) eine ATI-Antwortnachricht zu empfangen, welche mit dem MAP-Protokoll übereinstimmt, welche die Positionsinformation enthält.

34. Positions-Server nach Anspruch 33, **dadurch gekennzeichnet, dass** der Positions-Server die Datenbank (DB) aufweist, um die Teilnehmerkennung/die IP-Adressenpaare zu speichern.

35. Positions-Server nach Anspruch 33, **dadurch gekennzeichnet, dass** der Positions-Server eine Nachrichteneinrichtung (IP) aufweist, um die Teilnehmerkennung/das IP-Adressenpaar von der Datenbank (DB) wiederherzustellen.

36. Positions-Server nach Anspruch 33, **dadurch gekennzeichnet, dass** das Signalisier-Interface (SS7) so konfiguriert ist, dass es die ATI-Nachricht durch eine SRI-Nachricht substituiert, welche mit dem MAP-Protokoll übereinstimmt.

37. Positions-Server nach Anspruch 33, **dadurch gekennzeichnet, dass** die Teilnehmerkennung eine MSISDN-Nummer aufweist.

38. Positions-Server nach Anspruch 33, **dadurch gekennzeichnet, dass** die Positionsinformation eine CellID-Kenhung aufweist.

39. Positions-Server nach Anspruch 33, **dadurch gekennzeichnet, dass** der Positions-Server eine Akquisitionseinrichtung (DM) aufweist, um die Teilnehmerkennung/das IP-Adressenpaar herauszufinden, welches mit dem Nutzer der Endgeräteeinrichtung (MS) verbunden ist.

40. Positions-Server nach Anspruch 39, **dadurch gekennzeichnet, dass** die Datenakquisitionsvorrichtung (DM) benutzt wird, um sich auf ein Radius-Server-Programm zu beziehen.

41. Positions-Server nach Anspruch 39, **dadurch gekennzeichnet, dass** die Datenakquisitionseinrichtung (DM) benutzt wird, um sich auf einen Datenkollektor zu beziehen, welcher benutzt wird, um einen GTP-Tunnel (GTP) zwischen dem SGSN-Knoten (SGSN) und einem GGSN-Knoten (GGSN) zu überwachen.

42. Positions-Server zum Erhalten von Positionsinformation einer Endgeräteeinrichtung (MS) eines Telekommunikationsnetzwerkes,
**dadurch gekennzeichnet, dass** der Positions-Server aufweist:
eine Nachrichteneinrichtung (IP), welche so konfiguriert ist, dass sie eine Positionsinformationsanforderung empfängt, welche eine Mobilteilnehmerkennung enthält und um die Positionsinformation an einen Service-Provider (SP) zu übertragen, und
ein Signalisier-Interface (SS7), welches so konfiguriert ist, dass es die IMSI-Kennung und die Adresse eines dienenden Mobilschaltzentrums (MSC) von einem Heimatregister (HLR) herausfindet, basierend auf der Teilnehmerkennung, um eine Kurznachricht an die Endgeräteeinrichtung (MS) über eine Schaltverbindung zu senden, um eine ATI-Nachricht, welche mit dem MAP-Protokoll übereinstimmt, an das Heimatregister (HLR) zu senden, wobei die ATI-Nachricht die Teilnehmerkennung des Nutzers der Endgeräteeinrichtung (MS) enthält, und um eine ATI-Antwortnachricht, welche mit dem MAP-Protokoll übereinstimmt, von dem Heimatregister (HLR) zu empfangen, wobei die ATI-Antwortnachricht die Positionsinformation enthält.

43. Positions-Server nach Anspruch 42, **dadurch gekennzeichnet, dass** der Positions-Server die Datenbank (DB) aufweist, um die Teilnehmerkennung/IP-Adressenpaare zu speichern.

44. Positions-Server nach Anspruch 42, **dadurch gekennzeichnet, dass** das Signalisier-Interface (SS7) so konfiguriert ist, dass es die ATI-Nachricht durch eine SRI-Nachricht ersetzt, welche mit dem MAP-Protokoll übereinstimmt.

45. Positions-Server nach Anspruch 42, **dadurch gekennzeichnet, dass**, falls das MMS-Bit in der Kurznachricht aktiviert wird, das Signalisier-Interface (SS7) so konfiguriert ist, dass es eine MAP-Abbruchnachricht an das Mobilschaltzentrum sendet, bevor die Positionsinformation an den Service-Provider (SP) übertragen wird.

46. Positions-Server nach Anspruch 42, **dadurch gekennzeichnet, dass** die Teilnehmerkennung eine MSISDN-Nummer aufweist.

47. Positions-Server nach Anspruch 42, **dadurch gekennzeichnet, dass** die Positionsinformation eine CellID-Kennung aufweist.

48. Positions-Server nach Anspruch 42, **dadurch gekennzeichnet, dass** der Positions-Server eine Datenakquisitionseinrichtung (DM) aufweist, um die Teilnehmerkennung/das IP-Adressenpaar herauszufinden, welches mit dem Nutzer der Endgeräteeinrichtung (MS) verbunden ist.

49. Positions-Server nach Anspruch 48, **dadurch gekennzeichnet, dass** die Datenakquisitionseinrichtung (DM) benutzt wird, um sich auf ein Radius-Dienstprogramm zu beziehen.

50. Positions-Server nach Anspruch 48, **dadurch gekennzeichnet, dass** die Datenakquisitionseinrichtung (DM) benutzt wird, um sich auf einen Datenkollektor zu beziehen, welcher benutzt wird, um ein GTP-Tunnel (GTP) zwischen dem SGSN-Knoten (SGSN) und einem GGSN-Knoten (GGSN) zu überwachen.

51. System zum Erhalten von Positionsinformation einer Endgeräteeinrichtung eines GPRS-Netzwerkes, wobei das System aufweist:
einen SGSN-Knoten (SGSN);
einen GGSN-Knoten (GGSN), welcher mit dem SGSN-Knoten (SGSN) verbunden ist;
einen GTP-Tunnel (GTP), welcher zwischen dem SGSN-Knoten (SGSN) und dem GGSN-Knoten (GGSN) platziert ist;
einen Service-Provider (SP), welcher mit dem GGSN-Knoten (GGSN) kommuniziert;
eine Endgeräteeinrichtung (MS), welche mit dem SGSN-Knoten (SGSN) kommuniziert;
ein Heimatregister (HLR);
ein Besucherregister (VLR), welches mit dem Heimatregister (HLR) und dem SGSN-Knoten (SGSN) kommuniziert;
ein Mobilschaltzentrum (MSC), welches mit dem Besucherregister (VLR) kommuniziert;
eine Datenakquisitionseinrichtung (DM), um die Teilnehmerkennung/das IP-Adressenpaar herauszufinden, welches mit dem Nutzer der Endgeräteeinrichtung (MS) verbunden ist; eine Datenbank (DB) zum Speichern der Teilnehmerkennung/der IP-Adressenpaare, welche durch Benutzen der Datenakquisitionseinrichtung (DM) erhalten werden;
**dadurch gekennzeichnet, dass** das System ferner aufweist:
einen Positions-Server (LOC), welcher aufweist:
eine Nachrichteneinrichtung (IP), welche so konfiguriert ist, dass sie eine Anforderung von dem Service-Provider (SP) empfängt, wobei die Anforderung die IP-Adresse enthält, welche dem PDP-Kontext zugewiesen ist, um die Teilnehmerkennung, welche mit der IP-Adresse verbunden ist, von der Datenbank (DB), basierend auf der Anforderung, zu bestimmen und die empfangene Positionsinformation an den Service-Provider (SP) zu übertragen; und
ein Signalisier-Interface (SS7), welches so konfiguriert ist, um die IMSI-Kennung von dem Heimatregister (HLR), basierend auf der Teilnehmerkennung, herauszufinden, um den SGSN-Knoten (SGSN) herauszufinden, welcher die Endgeräteeinrichtung (MS) von dem Heimatregister (HLR) bedient, um eine BSSAP+ MS-Informationsanforderungsnachricht an den SGSN-Knoten (SGSN) zu senden und um eine Positionsinformation von der Endgeräteeinrichtung (MS) von dem SGSN-Knoten (SGSN) in einer BSSAP+ MS-Informationsantwortnachricht zu empfangen;
wobei der Positions-Server so konfiguriert ist, dass er durch Benutzen des Signalisier-Interface (SS7) als ein Standardnetzwerkelement sich gegenüber den zuvor erwähnten Netzwerkelementen positioniert.

52. System nach Anspruch 51 **dadurch gekennzeichnet, dass** der Positions-Server (LOC) die Datenbank (DB) aufweist, um die Teilnehmerkennung/die IP-Adressenpaare zu speichern.

53. System nach Anspruch 51, **dadurch gekennzeichnet, dass** der Positions-Server (LOC) eine Nachrichteneinrichtung (IP) aufweist, um die Teilnehmerkennung/IP-Adressenpaare von der Datenbank (DB) wiederzugewinnen.

54. System nach Anspruch 51, **dadurch gekennzeichnet, dass** der Positions-Server (LOC) eine Datenakquisitionseinrichtung (DM) aufweist, um die Teilnehmerkennung/das IP-Adressenpaar, welches mit dem Nutzer der Endgeräteeinrichtung verbunden ist, herauszufinden.

55. System nach Anspruch 54, **dadurch gekennzeichnet, dass** die Datenakquisitionseinrichtung (DM) benutzt wird, um sich auf ein Radius-Server-Programm zu beziehen.

56. System nach Anspruch 54, **dadurch gekennzeichnet, dass** die Datenakquisitionseinrichtung (DM) benutzt wird, um sich auf einen Datenkollektor zu beziehen, welcher benutzt wird, um den GTP-Tunnel (GTP) zwischen dem SGSN-Knoten (SGSN) und dem GGSN-Knoten (GGSN) zu überwachen.

57. System nach Anspruch 51, **dadurch gekennzeichnet, dass** der SGSN-Knoten (SGSN) eine Datenübertragungseinrichtung (MM) aufweist, um die Teilnehmerkennung/das IP-Adressenpaar an den Positions-Server (LOC) zu senden.

58. System nach Anspruch 51, **dadurch gekennzeichnet, dass** die Teilnehmerkennung eine MSISDN-Nummer aufweist.

59. System nach Anspruch 51, **dadurch gekennzeichnet, dass** die Positionsinformation eine CellID-Kennung aufweist.

60. System zum Erhalten von Positionsinformation von einer Endgeräteeinrichtung eines GPRS-Netzwerkes, wobei das System aufweist:
einen SGSN-Knoten (SGSN);
einen GGSN-Knoten (GGSN), welcher mit dem SGSN-Knoten (SGSN) verbunden ist;
einen GTP-Tunnel (GTP), welcher zwischen dem SGSN-Knoten (SGSN) und dem GGSN-Knoten (GGSN) platziert ist;
einen Service-Provider (SP), welcher mit dem GGSN-Knoten (GGSN) kommuniziert;
eine Endgeräteeinrichtung (MS), welche mit dem SGSN-Knoten (SGSN) kommuniziert;
ein Heimatregister (HLR);
ein Besucherregister (VLR), welches mit dem Heimatregister (HLR) und mit dem SGSN-Knoten (SGSN) kommuniziert;
ein Mobilschaltzentrum (MSC), welches mit dem Besucherregister (VLR) kommuniziert;
eine Datenakquisitionseinrichtung (DM), um die Teilnehmerkennung/das IP-Adressenpaar herauszufinden, welches mit dem Nutzer der Endgeräteeinrichtung (MS) verbunden ist; eine Datenbank (DB), um die Teilnehmerkennung/ IP-Adressenpaare zu speichern, welche durch Benutzen der Datenakquisitionseinrichtung (DM) erhalten werden;
**dadurch gekennzeichnet, dass** das System ferner aufweist:
einen Positions-Server (LOC), welcher aufweist:
eine Nachrichteneinrichtung (IP), welche so konfiguriert ist, dass sie eine Anforderung von dem Service-Provider (SP) empfängt, welche die IP-Adresse enthält, welche dem PDP-Kontext zugewiesen ist, um die Teilnehmerkennung von der Datenbank (DB) herauszufinden, welche mit der IP-Adresse verbunden ist, basierend auf der Anforderung, und um die Positionsinformation an den Service-Provider (SP) zu übertragen; und
ein Signalisier-Interface (SS7), welches so konfiguriert ist, dass es eine ATI-Nachricht, an das Heimatregister (HLR) sendet, welche mit dem MAP-Protokoll übereinstimmt, welche die Teilnehmerkennung des Nutzers der Endgeräteeinrichtung (MS) enthält, und um von dem Heimatregister (HLR) eine ATI-Antwortnachricht, welche mit dem MAP-Protokoll übereinstimmt, zu empfangen, welche die Positionsinformation enthält;
wobei der Positions-Server so konfiguriert ist, dass er sich durch Nutzen des Signalisier-Interface (SS7) als ein Standardnetzwerkelement gegenüber den zuvor erwähnten Netzwerkelementen positioniert.

61. System nach Anspruch 60, **dadurch gekennzeichnet, dass** der Positions-Server (LOC) die Datenbank (DB) aufweist, um die Teilnehmerkennung/die IP-Adressenpaare zu speichern.

62. System nach Anspruch 60, **dadurch gekennzeichnet, dass** der Positions-Server (LOC) eine Nachrichteneinrichtung (IP) aufweist, um die Teilnehmerkennung/die IP-Adressenpaare von der Datenbank (DB) wiederzugewinnen.

63. System nach Anspruch 60, **dadurch gekennzeichnet, dass** der Positions-Server (LOC) eine Datenakquisitionseinrichtung (DM) aufweist, um die Teilnehmerkennung/das IP-Adressenpaare herauszufinden, welches mit dem Nutzer der Endgeräteeinrichtung (MS) verbunden ist.

64. System nach Anspruch 63, **dadurch gekennzeichnet, dass** die Datenakquisitionseinrichtung (DM) benutzt wird, um sich auf ein Radius-Server-Programm zu beziehen.

65. System nach Anspruch 63, **dadurch gekennzeichnet, dass** die Datenakquisitionseinrichtung (DM) benutzt wird, um sich auf einen Datenkollektor zu beziehen, welcher benutzt wird, um den GTP-Tunnel (GTP) zwischen dem SGSN-Knoten (SGSN) und dem GGSN-Knoten (GGSN) zu überwachen.

66. System nach Anspruch 60, **dadurch gekennzeichnet, dass** der SGSN-Knoten (SGSN) eine Datenübertragungseinrichtung (MM) aufweist, um die Teilnehmerkennung/das IP-Adressenpaar an den Positions-Server (LOC) zu senden.

67. System nach Anspruch 60, **dadurch gekennzeichnet, dass** die Teilnehmerkennung eine MSISDN-Nummer aufweist.

68. System nach Anspruch 60, **dadurch gekennzeichnet, dass** die Positionsinformation eine CellID-Kennung aufweist.

69. System zum Erhalten von Positionsinformation zum Erhalten einer Endgeräteeinrichtung eines GPRS-Netzwerkes, wobei das System aufweist:
einen SGSN-Knoten (SGSN);
einen GGSN-Knoten (GGSN), welcher mit dem SGSN-Knoten (SGSN) verbunden ist;
einen GTP-Tunnel (GTP), welcher zwischen dem SGSN-Knoten (SGSN) und dem GGSN-Knoten (GGSN) platziert ist;
einen Service-Provider (SP), welcher mit dem GGSN-Knoten (GGSN) kommuniziert;
eine Endgeräteeinrichtung (MS), welche mit dem SGSN-Knoten (SGSN) kommuniziert;
ein Heimatregister (HLR);
ein Besucherregister (VLR), welches mit dem Heimatregister (HLR) und mit dem SGSN-Knoten (SGSN) kommuniziert;
ein Mobilschaltzentrum (MSC), welches mit dem Besucherregister (VLR) kommuniziert;
eine Datenakquisitionseinrichtung (DM), um die Teilnehmerkennung/das IP-Adressenpaare herauszufinden, welches mit dem Nutzer der Endgeräteeinrichtung (MS) verbunden ist;
eine Datenbank (DB), um die Teilnehmerkennung/ IP-Adressenpaare zu speichern, welche durch Nutzen der Datenakquisitionseinrichtung (DM) erhalten wird/ werden;
**dadurch gekennzeichnet, dass** das System ferner aufweist:
einen Positions-Server (LOC), welcher aufweist:
eine Nachrichteneinrichtung (IP), welches so konfiguriert ist, um eine Positionsinformationsanforderung zu empfangen, welche eine Mobilteilnehmerkennung enthält, um die Positionsinformation an den Service-Provider (SP) zu übertragen; und
ein Signalisier-Interface (SS7), welche so konfiguriert ist, dass es die IMSI-Kennung und die Adresse des dienenden Mobilschaltzentrums (MSC) von dem Heimatregister (HLR) basierend auf der Teilnehmerkennung herausfindet, um eine Kurznachricht an die Endgeräteeinrichtung (MS) über eine Schaltverbindung zu senden, um eine ATI-Nachricht, welche mit dem MAP-Protokoll übereinstimmt, an das Heimatregister (HLR) zu senden, wobei die ATI-Nachricht die Teilnehmerkennung des Nutzers der Endgeräteeinrichtung (MS) enthält, und um eine ATI-Empfangsnachricht, welche mit dem MAP-Protokoll übereinstimmt, von dem Heimatregister (HLR) zu empfangen, wobei die ATI-Antwortnachricht die Positionsinformation enthält;
wobei der Positions-Server so konfiguriert ist, dass er sich durch Nutzen des Signalisier-Interface (SS7) als ein Standard-Netzwerkelement gegenüber den zuvor erwähnten Netzwerkelementen positioniert.

70. System nach Anspruch 69, **dadurch gekennzeichnet, dass** der Positions-Server (LOC) die Datenbank (DB) aufweist, um die Teilnehmerkennung/die IP-Adressenpaare zu speichern.

71. System nach Anspruch 69, **dadurch gekennzeichnet, dass** der Positions-Server (LOC) eine Nachrichteneinrichtung (IP) aufweist, um die Teilnehmerkennung/ IP-Adressenpaare von der Datenbank (DB) wiederzugewinnen.

72. System nach Anspruch 69, **dadurch gekennzeichnet, dass** der Positions-Server (LOC) eine Datenakquisitionseinrichtung (DM) aufweist, um die Teilnehmerkennung/das IP-Adressenpaar herauszufinden, welches mit dem Nutzer der Endgeräteeinrichtung (MS) verbunden ist.

73. System nach Anspruch 72, **dadurch gekennzeichnet, dass** die Datenakquisitionseinrichtung (DM) benutzt wird, um sich auf ein Radius-Server-Programm zu beziehen.

74. System nach Anspruch 72, **dadurch gekennzeichnet, dass** die Datenakquisitionseinrichtung (DM) benutzt wird, um sich auf einen Datenkollektor zu beziehen, welcher benutzt wird, um den GTP-Tunnel (GTP) zwischen dem SGSN-Knoten (SGSN) und dem GGSN-Knoten (GGSN) zu überwachen.

75. System nach Anspruch 69, **dadurch gekennzeichnet, dass** der SGSN-Knoten (SGSN) eine Datenübertragungseinrichtung (MM) aufweist, um die Teilnehmerkennung/das-IP-Adressenpaar an den Positions-Server (LOC) zu senden.

76. System nach Anspruch 69, **dadurch gekennzeichnet, dass** die Teilnehmerkennung eine MSISDN-Nummer aufweist.

77. System nach Anspruch 69, **dadurch gekennzeichnet, dass** die Positionsinformation eine CellID-Kennung aufweist.
